(19) Europäisches Patentamt
European Patent Office
Office européen des brevets

(11) **EP 4 654 082 A1**

(12) **EUROPEAN PATENT APPLICATION**
published in accordance with Art. 153(4) EPC

(43) Date of publication:
**26.11.2025   Bulletin 2025/48**

(51) International Patent Classification (IPC):
**G06N 3/0464** *(2023.01)*      **G06N 3/048** *(2023.01)*
**G06N 3/084** *(2023.01)*

(21) Application number: **24749698.7**

(22) Date of filing: **31.01.2024**

(86) International application number:
**PCT/CN2024/074846**

(87) International publication number:
**WO 2024/160219 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.01.2023   CN 202310129458**

(71) Applicant: **Huawei Technologies Co., Ltd.
Shenzhen, Guangdong 518129 (CN)**

(72) Inventors:
• **TU, Zhijun**
  **Shenzhen, Guangdong 518129 (CN)**
• **HU, Jie**
  **Shenzhen, Guangdong 518129 (CN)**
• **CHEN, Hanting**
  **Shenzhen, Guangdong 518129 (CN)**
• **WANG, Yunhe**
  **Shenzhen, Guangdong 518129 (CN)**

(74) Representative: **Goddar, Heinz J. et al
Boehmert & Boehmert
Anwaltspartnerschaft mbB
Pettenkoferstrasse 22
80336 München (DE)**

(54) **MODEL QUANTIZATION METHOD AND APPARATUS**

(57)    This application discloses a model quantization method, and relates to the artificial intelligence field. The method includes: obtaining a first feature map output by a first intermediate layer of a neural network; and determining, based on numeric distribution of a plurality of first feature points in the first feature map, a first clipping interval that meets a preset condition, where the first clipping interval includes a first upper boundary threshold and a first lower boundary threshold; and the preset condition includes: numeric distribution density of feature points in the numeric clipping interval is greater than numeric distribution density of feature points outside the numeric clipping interval. In this application, an upper clipping threshold and a lower clipping threshold are used to represent quantized parameter settings, instead of a common zero-point location and range in the previous solution. Density-based dual clipping is first used for a floating-point model, to remove outliers in long-tail distribution, so as to adapt to an asymmetric distribution trend. Further, precision of a quantized model is improved.

[FIG. 7]

**Description**

This application claims priority to Chinese Patent Application No. 202310129458.6, filed with the China National Intellectual Property Administration on January 31, 2023 and entitled "MODEL QUANTIZATION METHOD AND APPARATUS", which is incorporated herein by reference in its entirety.

**TECHNICAL FIELD**

This application relates to the artificial intelligence field, and in particular, to a model quantization method and apparatus.

**BACKGROUND**

Neural network models (especially models that implement visual-related tasks) require a large amount of memory space and computing resources during actual running, which makes it difficult to deploy the neural network models on mobile devices.

To improve running efficiency, various different methods are used to compress a model size, such as network pruning, model quantization, lightweight architecture design, and knowledge distillation. In these methods, model quantization is a relatively better technology for existing artificial intelligence acceleration chips. Because these chips usually focus on low-precision calculation, a latency, memory occupation, and power consumption of model inference can be significantly reduced. However, in the conventional technology, precision of a compressed model obtained by using a model quantization method is reduced.

**SUMMARY**

This application provides a model quantization method and a related apparatus, to improve network precision.

According to a first aspect, an embodiment of this application provides a model quantization method. The method includes: obtaining a first feature map, where the first feature map is a feature map output by a first intermediate layer of a neural network, the first feature map includes a plurality of first feature points, and the neural network is a floating-point model; and determining, based on numeric distribution of the plurality of first feature points, a first clipping interval that meets a preset condition, where the first clipping interval includes a first upper boundary threshold and a first lower boundary threshold; when the feature map output by the first intermediate layer is quantized, a value of a first feature point less than the first lower boundary threshold is quantized to the first lower boundary threshold, and a value of a first feature point greater than the first upper boundary threshold is quantized to the first upper boundary threshold; and the preset condition includes: numeric distribution density of feature points in the numeric clipping interval is greater than numeric distribution density of feature points outside the numeric clipping interval. In this application, an upper clipping threshold and a lower clipping threshold are used to represent quantized parameter settings, instead of a common zero-point location and range in the previous solution. Density-based dual clipping is first used for a floating-point model, to remove outliers in long-tail distribution, so as to adapt to an asymmetric distribution trend. Further, precision of a quantized model is improved.

In a possible implementation, the preset condition further includes: a proportion of a quantity of the feature points in the numeric clipping interval in a quantity of feature points included in the feature map is greater than a first threshold.

In a possible implementation, the determining, based on numeric distribution of the plurality of first feature points, a first clipping interval that meets a preset condition includes: dividing a numeric range of the plurality of first feature points into a plurality of numeric intervals based on values; and sequentially determining, from two sides of the plurality of numeric intervals to the inside, numeric intervals with low numeric distribution density as edge numeric intervals; and until a proportion of a quantity of first feature points in another numeric interval other than the edge numeric intervals in the plurality of numeric intervals to a quantity of the plurality of first feature points is less than a second threshold, determining the another numeric interval as the first clipping interval.

Distribution of the feature map output by the intermediate layer of the model is usually shown as dense in the middle and sparse at both ends. Therefore, a dense area is far away from an original boundary, which is very unfriendly to model quantization, especially for low-bit model quantization. Therefore, in this embodiment of this application, density-based dual clipping is proposed to cut off outliers of the feature map, to help narrow the distribution to an effective range. Distribution density of an upper end and that of a lower end are continuously compared, so that outliers in floating-point parameters are removed by considering long-tail distribution and asymmetric distribution of the feature map, to obtain a floating-point model with rough upper and lower boundaries.

In a possible implementation, the first feature map is a feature map output by the first intermediate layer when the neural network processes a first batch of training samples; and the method further includes: obtaining a second feature map, where the second feature map is a feature map output by the first intermediate layer when the neural network processes a second batch of training samples, and the second feature map includes a plurality of second feature points; determining, based on numeric distribution of the plurality of second feature points, a second clipping interval that meets the preset condition, where the second clipping interval includes a second upper boundary threshold and a second lower boundary threshold; and updating the first clipping interval based on the second clipping interval to obtain a third clipping interval. Different clipping intervals may be determined for output feature maps of different intermediate layers in the neural network based on numeric distribution of the feature maps.

In a possible implementation, the updating the first clipping interval based on the second clipping interval includes: updating the first clipping interval based on the second clipping interval through exponential moving average.

Pixel-aware calibration may be performed, and the model is quantized based on the floating-point parameters obtained in the first step. Then, the full-precision model is used to monitor the low-bit quantized model, and a quantization parameter is further fine-tuned based on a small calibration dataset, so that the quantization parameter further adapts to a highly dynamic feature map distribution change in a fine-tuning process.

In a possible implementation, the method further includes: obtaining a third feature map, where the third feature map is a feature map output by a second intermediate layer in the neural network, the third feature map includes a plurality of third feature points, and the neural network is the floating-point model; and determining, based on numeric distribution of the plurality of third feature points, the third clipping interval that meets the preset condition, where the third clipping interval includes a third upper boundary threshold and a third lower boundary threshold; when the feature map output by the second intermediate layer is quantized, a value of a third feature point less than the third lower boundary threshold is quantized to the third lower boundary threshold, and a value of a third feature point greater than the third upper boundary threshold is quantized to the third upper boundary threshold.

In a possible implementation, the first clipping interval is used to quantize the neural network to obtain a quantized neural network; and the method further includes: obtaining a first output and a second output, where the first output is an output of an intermediate layer or an output layer when the neural network processes a training sample, and the second output is an output of the intermediate layer or the output layer when the quantized neural network processes the training sample; and determining a loss based on the first output and the second output, and updating the first clipping interval based on the loss. The model appropriately fine-tunes the quantization parameter according to a pixel-aware calibration policy, so that the quantized model can better adapt to a highly dynamic feature change.

In a possible implementation, the training sample is unlabeled data.

In this application, only a small amount of unlabeled calibration data is required, and the quantized model can be obtained in several minutes without training. In comparison with quantization-aware training, during post-training quantization in this embodiment of this application, a complete training dataset and expensive server training resources are not required. This greatly reduces costs required in a model quantization process. In addition, a structure and a parameter of the quantized model can be obtained in a short time. This greatly improves efficiency of model deployment.

In a possible implementation, the first output and the second output are feature maps output by the intermediate layer; and the determining a loss based on the first output and the second output includes: separately calculating norms of L2 for the first output and the second output, to obtain a processed first output and a processed second output; and determining the loss based on a mean squared error between the processed first output and the processed second output.

In a possible implementation, the updating the first clipping interval based on the loss includes: updating the first clipping interval based on the loss when a clipping interval corresponding to a weight parameter of the neural network remains unchanged.

According to a second aspect, this application provides a model quantization apparatus. The apparatus includes:

an obtaining module, configured to obtain a first feature map, where the first feature map is a feature map output by a first intermediate layer of a neural network, the first feature map includes a plurality of first feature points, and the neural network is a floating-point model; and

a processing module, configured to determine, based on numeric distribution of the plurality of first feature points, a first clipping interval that meets a preset condition, where the first clipping interval includes a first upper boundary threshold and a first lower boundary threshold; when the feature map output by the first intermediate layer is quantized, a value of a first feature point less than the first lower boundary threshold is quantized to the first lower boundary threshold, and a value of a first feature point greater than the first upper boundary threshold is quantized to the first upper boundary threshold; and the preset condition includes: numeric distribution density of feature points in the numeric clipping interval is greater than numeric distribution density of feature points outside the numeric clipping interval.

In a possible implementation, the preset condition further includes: a proportion of a quantity of the feature points in the numeric clipping interval in a quantity of feature points included in the feature map is greater than a first threshold.

In a possible implementation, the processing module is specifically configured to:

divide a numeric range of the plurality of first feature points into a plurality of numeric intervals based on values; and sequentially determine, from two sides of the plurality of numeric intervals to the inside, numeric intervals with low numeric distribution density as edge numeric intervals; and until a proportion of a quantity of first feature points in another numeric interval other than the edge numeric intervals in the plurality of numeric intervals to a quantity of the plurality of first feature points is less than a second threshold, determine the another numeric interval as the first clipping interval.

In a possible implementation, the first feature map is a feature map output by the first intermediate layer when the neural network processes a first batch of training samples;
the obtaining module is further configured to:

obtain a second feature map, where the second feature map is a feature map output by the first intermediate layer when the neural network processes a second batch of training samples, and the second feature map includes a plurality of second feature points; and
the processing module is further configured to:

determine, based on numeric distribution of the plurality of second feature points, a second clipping interval that meets the preset condition, where the second clipping interval includes a second upper boundary threshold and a second lower boundary threshold; and
update the first clipping interval based on the second clipping interval to obtain a third clipping interval.

In a possible implementation, the processing module is specifically configured to:
update the first clipping interval based on the second clipping interval through exponential moving average.
In a possible implementation, the obtaining module is further configured to:

obtain a third feature map, where the third feature map is a feature map output by a second intermediate layer in the neural network, the third feature map includes a plurality of third feature points, and the neural network is the floating-point model; and
the processing module is further configured to:
determine, based on numeric distribution of the plurality of third feature points, the third clipping interval that meets the preset condition, where the third clipping interval includes a third upper boundary threshold and a third lower boundary threshold; when the feature map output by the second intermediate layer is quantized, a value of a third feature point less than the third lower boundary threshold is quantized to the third lower boundary threshold, and a value of a third feature point greater than the third upper boundary threshold is quantized to the third upper boundary threshold.

In a possible implementation, the first clipping interval is used to quantize the neural network to obtain a quantized neural network; and the obtaining module is further configured to:
the processing module is further configured to:

obtain a first output and a second output, where the first output is an output of an intermediate layer or an output layer when the neural network processes a training sample, and the second output is an output of the intermediate layer or the output layer when the quantized neural network processes the training sample; and
determine a loss based on the first output and the second output, and update the first clipping interval based on the loss.

In a possible implementation, the training sample is unlabeled data.
In a possible implementation, the processing module is specifically configured to:

separately calculate norms of L2 for the first output and the second output, to obtain a processed first output and a processed second output; and
determine the loss based on a mean squared error between the processed first output and the processed second output.

In a possible implementation, the processing module is specifically configured to:
update the first clipping interval based on the loss when a clipping interval corresponding to a weight parameter of the neural network remains unchanged.

According to a third aspect, an embodiment of this application provides a data processing apparatus that may include a memory, a processor, and a bus system. The memory is configured to store a program. The processor is configured to execute the program in the memory, to perform the method in any one of the first aspect and the optional implementations of the first aspect.

According to a fourth aspect, an embodiment of this application provides a computer-readable storage medium. The computer-readable storage medium stores a computer program, and when the computer program is run on a computer, the computer is enabled to perform the method in any one of the first aspect and the optional implementations of the first aspect.

According to a fifth aspect, an embodiment of this application provides a computer program. When the computer program is run on a computer, the computer is enabled to perform the method in any one of the first aspect and the optional implementations of the first aspect.

According to a sixth aspect, this application provides a chip system. The chip system includes a processor, configured to support an execution device or a training device to implement functions in the foregoing aspects, for example, send or process data or information in the foregoing method. In a possible design, the chip system further includes a memory. The memory is configured to store program instructions and data that are necessary for the execution device or the training device. The chip system may include a chip, or may include a chip and another discrete component.

## BRIEF DESCRIPTION OF DRAWINGS

FIG. 1 is a diagram of a structure of an artificial intelligence main framework;
FIG. 2 is a diagram of an application system framework according to this application;
FIG. 3a is a diagram of an application scenario according to this application;
FIG. 3b is a diagram of an application scenario according to this application;
FIG. 4 is a diagram of an application scenario according to this application;
FIG. 5 is a diagram of an application scenario according to this application;
FIG. 6 is a diagram of a chip architecture according to this application;
FIG. 7 is a schematic flowchart of a model quantization method according to an embodiment of this application;
FIG. 8A is a diagram of numeric distribution;
FIG. 8B is a schematic flowchart of a model quantization method according to an embodiment of this application;
FIG. 9 is a schematic flowchart of a model quantization method according to an embodiment of this application;
FIG. 10 is a schematic flowchart of a model quantization method according to an embodiment of this application;
FIG. 11 is a diagram of effect of a model quantization method according to an embodiment of this application;
FIG. 12 is a diagram of a structure of a model quantization apparatus according to an embodiment of this application;
FIG. 13 is a diagram of a structure of an execution device according to an embodiment of this application;
FIG. 14 is a diagram of a structure of a training device according to an embodiment of this application; and
FIG. 15 is a diagram of a structure of a chip according to an embodiment of this application.

## DESCRIPTION OF EMBODIMENTS

The following describes embodiments of this application with reference to accompanying drawings in embodiments of this application. Terms used in implementations of this application are only used to explain specific embodiments of this application, but are not intended to limit this application.

The following describes embodiments of this application with reference to the accompanying drawings. A person of ordinary skill in the art may learn that, with development of technologies and emergence of a new scenario, technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

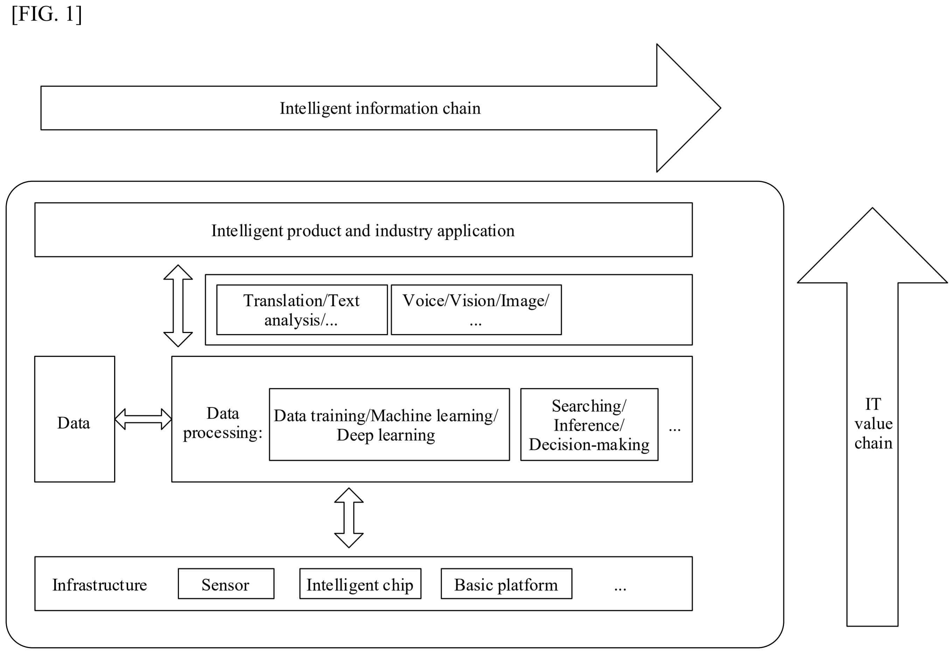

An overall working procedure of an artificial intelligence system is first described. FIG. 1 is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. A sensor is used to communicate with the outside. A computing capability is provided by an intelligent chip (a hardware acceleration chip like a CPU, an NPU, a GPU, an ASIC, or an FPGA). The basic platform includes related platforms such as a distributed computing framework and a network for assurance and support, and may include cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the artificial intelligence field. The data relates to a graph, an image, a speech, and a text, further relates to internet of things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.
Machine learning and deep learning may mean performing symbolic and formal intelligent information modeling, extraction, preprocessing, training, and the like on data.
Inference is a process in which human intelligent inference is simulated in a computer or an intelligent system, and machine thinking and problem resolving are performed based on formal information according to an inference control policy. A typical function is searching and matching.
Decision-making is a process of making a decision after intelligent information is inferred, and usually provides functions such as classification, ranking, and prediction.

(4) General capability

After data processing mentioned above is performed on the data, some general capabilities may further be formed based on a data processing result. For example, the general capability may be an algorithm or a general system, for example, translation, text analysis, computer vision processing, speech recognition, or image recognition.

(5) Intelligent product and industry application

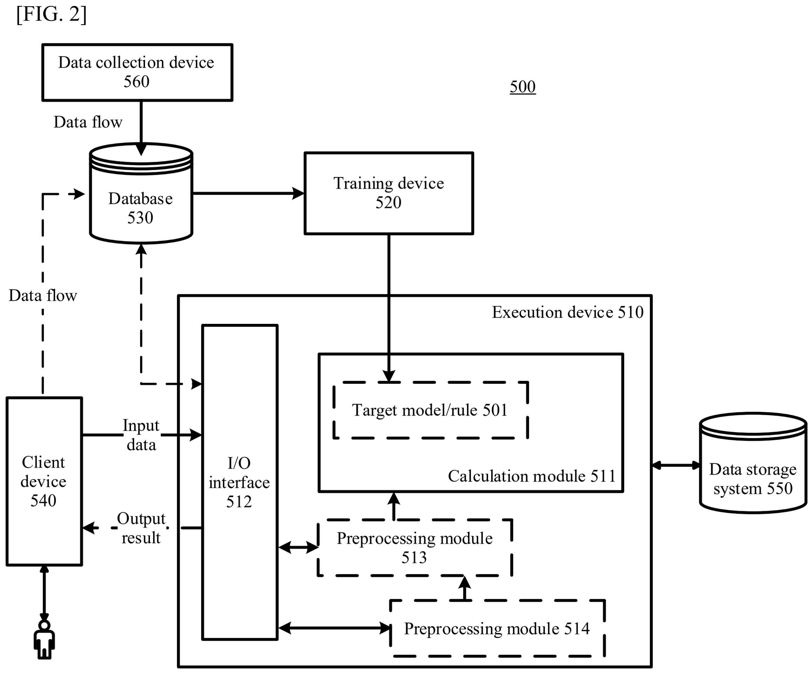

The intelligent product and industry application are products and applications of the artificial intelligence system in various fields. The intelligent product and industry application involve packaging overall artificial intelligence solutions, to productize and apply intelligent information decision-making. Application fields of the intelligent product and industry application mainly include intelligent terminals, intelligent transportation, intelligent health care, autonomous driving, smart cities, and the like.
An application scenario of this application is first described. This application may be applied to but is not limited to a cloud service (a compression service like model quantization) provided by a cloud server.
In a possible implementation, a server may provide a neural network compression service like model quantization for a terminal device through an application programming interface (application programming interface, API).
The terminal device may send a related parameter (for example, a compression requirement) to the server through the API provided by a cloud. The server may obtain a processing result based on the received parameter, and return the processing result (for example, a compressed neural network model) to the terminal.
In addition, a model compression processing procedure may be further performed on the terminal device. This is not limited herein.
It should be understood that a model quantization method in embodiments of this application relates to an AI-related operation. The following describes in detail a system architecture provided in embodiments of this application with reference to FIG. 2.

FIG. 2 is a diagram of a system architecture according to an embodiment of this application. As shown in FIG. 2, the system architecture 500 includes an execution device 510, a training device 520, a database 530, a client device 540, a data storage system 550, and a data collection system 560.

The execution device 510 includes a calculation module 511, an I/O interface 512, a preprocessing module 513, and a preprocessing module 514. The calculation module 511 may include a target model/rule 501, and the preprocessing module 513 and the preprocessing module 514 are optional.

The training device 520 may be a device that performs a model quantization step.

The data collection device 560 is configured to collect a training sample. The training sample may be data such as an image, audio and video, and a text. After collecting the training sample, the data collection device 560 stores the training sample in the database 530.

The training device 520 may maintain a training sample in the database 530, and obtain a to-be-compressed neural network (for example, a neural network in embodiments of this application), to obtain the target model/rule 501.

It should be noted that in an actual application, the training sample maintained in the database 530 is not necessarily collected by the data collection device 560, and may be received from another device. In addition, it should be noted that the training device 520 does not necessarily completely compress the target model/rule 501 based on the training sample maintained in the database 530, and may perform model compression by obtaining a training sample from a cloud or another place. The foregoing descriptions should not be construed as a limitation on embodiments of this application.

The target model/rule 501 obtained by the training device 520 may be applied to different systems or devices, for example, applied to the execution device 510 shown in FIG. 2. The execution device 510 may be a terminal like a mobile phone terminal, a tablet computer, a notebook computer, an augmented reality (augmented reality, AR)/virtual reality (virtual reality, VR) device, or a vehicle-mounted terminal, or may be a server or the like.

Specifically, the training device 520 may transfer a compressed model to the execution device 510.

In FIG. 2, the input/output (input/output, I/O) interface 512 is configured for the execution device 510, and is configured to exchange data with an external device. A user may input data to the I/O interface 512 through the client device 540.

The preprocessing module 513 and the preprocessing module 514 are configured to perform preprocessing based on the input data received by the I/O interface 512. It should be understood that the preprocessing module 513 and the preprocessing module 514 may not exist, or there may be only one preprocessing module. When the preprocessing module 513 and the preprocessing module 514 do not exist, the calculation module 511 may be directly used to process the input data.

When the execution device 510 preprocesses the input data, or when the calculation module 511 in the execution device 510 performs a related processing process like calculation, the execution device 510 may invoke data, code, and the like in the data storage system 550 for corresponding processing, or may store data, instructions, and the like obtained through corresponding processing in the data storage system 550.

Finally, the I/O interface 512 provides a processing result (for example, a processing result obtained after the compressed model processes data according to the method provided in embodiments of this application) for the client device 540, to provide the processing result for the user.

In a case shown in FIG. 2, the user may manually specify the input data, and the "manually specifying the input data" may be operated on an interface provided by the I/O interface 512. In another case, the client device 540 may automatically send the input data to the I/O interface 512. If the client device 540 is required to automatically send the input data, authorization from the user needs to be obtained, and the user may set corresponding permission in the client device 540. The user may view, on the client device 540, the result output by the execution device 510. The result may be specifically presented in a specific manner, for example, display, sound, or an action. The client device 540 may also be used as a data collection terminal, collect the input data that is input to the I/O interface 512 and that is shown in the figure and the output result output from the I/O interface 512, use the input data and the output result as new sample data, and store the new sample data in the database 530. Certainly, alternatively, the client device 540 may not perform collection, and the I/O interface 512 directly uses the input data that is input to the I/O interface 512 and that is shown in the figure and the output result output from the I/O interface 512 as new sample data, and stores the new sample data in the database 530.

It should be noted that FIG. 2 is merely the diagram of the system architecture according to this embodiment of this application. A location relationship between the devices, the components, the modules, and the like shown in the figure does not constitute any limitation. For example, in FIG. 2, the data storage system 550 is an external memory relative to the execution device 510, but in another case, the data storage system 550 may alternatively be disposed in the execution device 510. It should be understood that the execution device 510 may be deployed in the client device 540.

Details from a perspective of model inference are as follows:

In this embodiment of this application, the calculation module 511 of the execution device 520 may obtain code stored in the data storage system 550 to perform model inference.

In this embodiment of this application, the calculation module 511 of the execution device 520 may include hardware circuits (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination thereof. For example, the training device 520 may be a hardware system having an instruction execution function, for example, a CPU or a DSP, a hardware system having no instruction execution function, for example, an ASIC or an FPGA, or a combination of the foregoing hardware system having no instruction execution function and the foregoing hardware system having an instruction execution function.

Specifically, the calculation module 511 of the execution device 520 may be a hardware system having an instruction execution function. The connection relationship prediction method provided in embodiments of this application may be software code stored in a memory. The calculation module 511 of the execution device 520 may obtain the software code from the memory, and execute the obtained software code to perform model inference.

It should be understood that the calculation module 511 of the execution device 520 may be a combination of a hardware system having no instruction execution function and a hardware system having an instruction execution function. Some steps of model inference may alternatively be implemented by using the hardware system that is in the calculation module 511 of the execution device 520 and that has no instruction execution function. This is not limited herein.

Details from a perspective of model training are as follows:

In this embodiment of this application, the training device 520 may obtain code stored in the memory (not shown in FIG. 2, and may be integrated into the training device 520 or separately deployed from the training device 520), to implement steps related to model compression in embodiments of this application.

In this embodiment of this application, the training device 520 may include hardware circuits (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination thereof. For example, the training device 520 may be a hardware system having an instruction execution function, for example, a CPU or a DSP, a hardware system having no instruction execution function, for example, an ASIC or an FPGA, or a combination of the foregoing hardware system having no instruction execution function and the foregoing hardware system having an instruction execution function.

It should be understood that the training device 520 may be a combination of a hardware system having no instruction execution function and a hardware system having an instruction execution function. Some steps related to model compression provided in embodiments of this application may alternatively be implemented by using the hardware system that is in the training device 520 and that has no instruction execution function. This is not limited herein.

A compressed neural network in embodiments of this application may be applied to fields that need to be implemented by the neural network, for example, a visual perception task, a natural language synthesis task related to speech semantics, and an audio and video processing task.

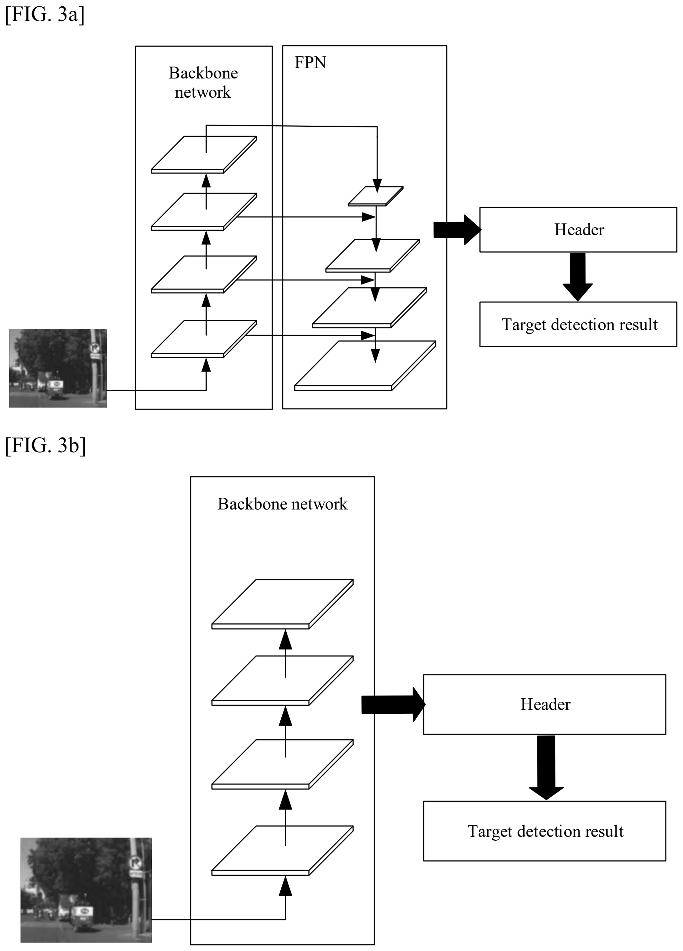

For example, the compressed neural network in this embodiment of this application may be applied to a field in which a plurality of perception tasks need to be completed, such as driving assistance, autonomous driving, and a mobile phone terminal. A diagram of an application system framework in this application may be shown in FIG. 3a and FIG. 3b. A single picture is obtained by performing frame extraction on a video, and the picture is input to the neural network provided in embodiments of this application, to obtain information such as 2D, 3D, a mask (mask), and a key point of an object of interest in the picture. These detection results are output to a post-processing module for processing. For example, the detection results are input to a planning control unit in an autonomous driving system for decision-making, or input to a beautification algorithm in a mobile phone terminal for processing to obtain a beautified image. The following separately briefly describes two application scenarios: an ADAS/ADS visual perception system and mobile phone beautification.

Application scenario 1: ADAS/ADS visual perception system

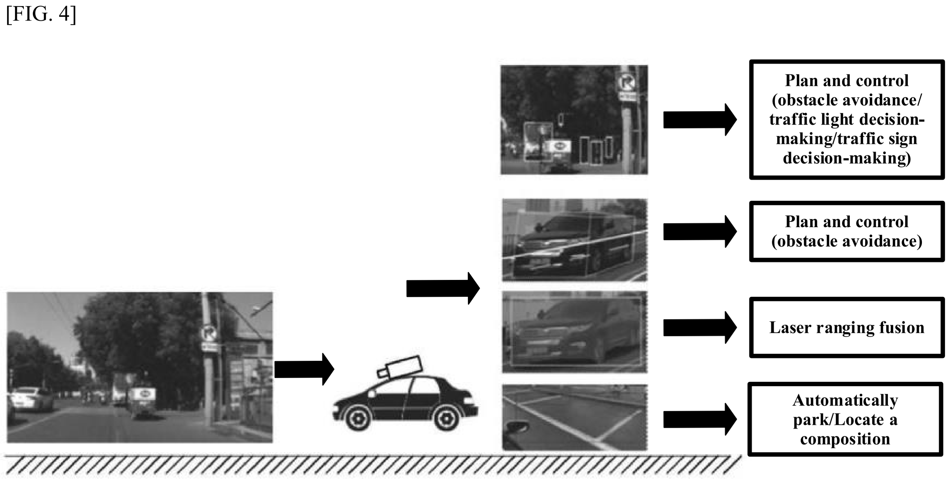

As shown in FIG. 4, in an ADAS and an ADS, a plurality of types of 2D targets need to be detected in real time, including dynamic obstacles (pedestrian (Pedestrian), cyclist (Cyclist), tricycle (Tricycle), car (Car), truck (Truck), and bus (Bus)) and static obstacles (traffic cone (Traffic Cone), traffic stick (Traffic Stick), fire hydrant (Fire Hydrant), motocycle (Motocycle), bicycle (Bicycle), traffic sign (Traffic Sign), guide sign (Guide Sign), billboard (Billboard), traffic light_red (Traffic Light_Red)/traffic light_yellow (Traffic Light_Yellow)/traffic light_green (Traffic Light_Green) /traffic light_black (Traffic Light_Black), and road sign (Road Sign)). In addition, to accurately obtain an area occupied by the dynamic obstacle in 3D space, 3D estimation further needs to be performed on the dynamic obstacle, to output a 3D box. To perform fusion with data of a laser radar, a mask of the dynamic obstacle needs to be obtained to filter out laser point clouds that hit the dynamic obstacle. To accurately locate parking space, four key points of the parking space need to be detected at the same time. To locate a composition, key points of static objects need to be detected. All or some of the foregoing functions may be completed via the neural network corresponding to the technical solutions provided in embodiments of this application.

For example, the compressed model obtained in the technical solutions provided in embodiments of this application may be applied to adaptive cruise in assisted driving and advanced assisted driving.

An adaptive cruise function in the ADAS is to adaptively adjust a speed of a current vehicle based on a location and a speed of a vehicle in front in a lane, to implement automatic cruise without a collision. When there is no another traffic participant (target) in front in the lane in which the current vehicle is located, the current vehicle moves forward based on a preset speed or a road speed limit. For example, when a perception system of the current vehicle detects that the another traffic participant enters the front of the lane, the current vehicle automatically reduces a speed of the current vehicle based on a location and the speed of the current vehicle, to avoid a collision caused by deceleration of the vehicle in front.

For example, the compressed model obtained in the technical solutions provided in embodiments of this application may be applied to target track prediction in autonomous assisted driving and monitoring.

In track prediction, a camera perceives a road scene, and information such as a location, an orientation, and a size of an important traffic participant in an environment is obtained according to a target detection algorithm. A movement speed and a movement direction of each target may be obtained by accumulating a plurality of frames of detection results, to predict a future movement track of the target and use the future movement track as a basis for subsequent decision-making and control of an autonomous vehicle. For example, a future movement direction of a surrounding vehicle may be predicted for the autonomous vehicle. For example, in a monitoring scene, future movement of a pedestrian may be predicted by detecting an orientation and a location of the pedestrian, to identify possible crowd behavior in advance.

In an unmanned vehicle, fast detection and positioning are performed on a picture shot by a camera, and locations of a pedestrian and a vehicle in the picture are identified, which is critical to running of the unmanned vehicle. Because running of the unmanned vehicle requires a fast response speed, detection has a high requirement on real-time performance. Object detection used in pedestrian and vehicle detection is also completed based on the neural network. The neural network uses a nonlinear enhanced activation function or a deep reparameterization training solution provided in this application. For example, the nonlinear enhanced activation function and the deep reparameterization training solution provided in this application are applied to the neural network (for example, a shallow neural network), to improve precision of the neural network, replace an originally used deep network, and achieve a faster detection speed.

Application scenario 2: mobile phone beautification function

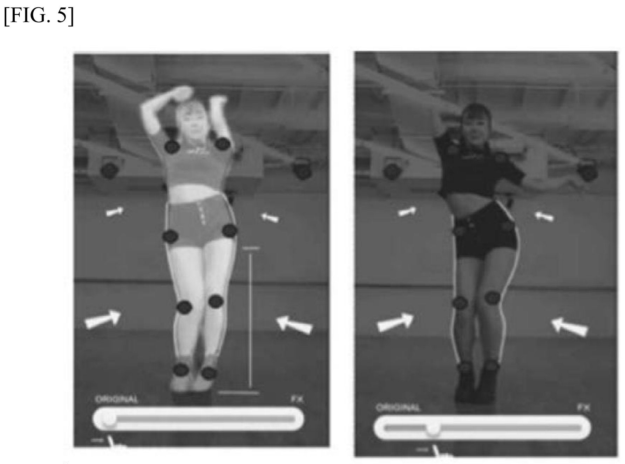

As shown in FIG. 5, in a mobile phone, a mask and a key point of a human body may be detected via the compressed neural network obtained according to the method provided in embodiments of this application, and a corresponding part of the human body may be zoomed in or out, for example, a waist slimming operation and a hip beautification operation are performed, to output a beautified picture.

Application scenario 3: image classification scenario

After obtaining a to-be-classified image, an object recognition apparatus may obtain a category of an object in the to-be-classified image via the compressed neural network obtained according to the method provided in this application, and then may classify the to-be-classified image based on the category of the object in the to-be-classified image. A photographer takes many photos every day, including an animal, a person, and a plant. According to the method in this application, the photos may be quickly classified based on content in the photos, and may be classified into a photo including the animal, a photo including the person, and a photo including the plant.

Application scenario 4: commodity classification

After an image of a commodity is obtained, a category of a commodity in the image of the commodity is obtained via the compressed neural network obtained according to the method provided in this application, and then the commodity is classified based on the category of the commodity. For various commodities in a large shopping mall or supermarket, classification of the commodities may be completed according to the model quantization method in this application. This reduces time overheads and labor costs.

Application scenario 5: natural language processing (NLP)

A natural language (natural language) is a human language, and natural language processing (NLP) is processing of the human language. Natural language processing is a process of systematic analysis, understanding, and information extraction of text data in an intelligent and efficient manner. NLP and components of NLP are used, so that massive chunks of text data can be managed, or a large quantity of automated tasks can be executed, and various problems such as automatic summarization (automatic summarization), machine translation (machine translation, MT), named entity recognition (named entity recognition, NER), relation extraction (relation extraction, RE), information extraction (information extraction, IE), sentiment analysis, speech recognition (speech recognition), a question answering (question answering) system, and topic segmentation can be resolved.

For example, there may be the following several types of natural language processing tasks.

Sequence tagging: A model needs to provide a classification category for each word in a sentence based on context. For example, sequence tagging is Chinese word segmentation, part-of-speech tagging, named entity recognition, or semantic role labeling.

Classification task: A classification value is output for an entire sentence. For example, the classification task is text classification.

Sentence relation inference: Two sentences are provided, and it is determined whether the two sentences have a nominal relation. For example, sentence relation inference is entailment, QA, semantic paraphrasing, or natural language inference.

Generative task: One piece of text is output, and another piece of text is generated. For example, the generative task is machine translation, text summarization, poem writing and sentence making, or picture description.

The following provides some natural language processing examples.

Word segmentation (word segmentation or word breaker, WB): Continuous natural language text is segmented into lexical sequences with semantic plausibility and integrity, to eliminate a cross ambiguity.

Named entity recognition (named entity recognition, NER): Named entity recognition identifies entities (people, places, institutions, time, works, and the like) with specific meanings in natural language text.

Part-of-speech tagging (part-of-speech tagging): A part of speech (noun, verb, adjective, or the like) is assigned to each word in natural language text. Dependency parsing (dependency parsing): Syntactic elements (subject, predicate, object, attributive, adverbial, complement, and the like) in a sentence are automatically analyzed, to eliminate a structural ambiguity.

Word embedding&semantic similarity (word embedding&semantic similarity): Words are represented as vectors, and semantic similarity calculation is performed on the words based on the vectors, to solve a problem of linguistic similarity between the words.

Text semantic similarity (text semantic similarity): Based on massive data in an entire network and a deep neural network technology, semantic similarity between pieces of text is calculated, to solve a problem of text semantic similarity.

Machine translation is used as an example. Machine translation studies translate words or speeches from one natural language to another via a computer program. The compressed neural network obtained in this application can implement the foregoing NLP task.

Embodiments of this application relate to massive application of a neural network. Therefore, for ease of understanding, the following first describes terms and concepts related to the neural network in embodiments of this application.

(1) Object recognition: A category of an image or object is determined by using related methods such as image processing, machine learning, and computer graphics.

(2) Neural network

The neural network may include a neuron. The neuron may be an operation unit that uses xs and an intercept of 1 as an input. An output of the operation unit may be as follows:

$$h_{W,b}\left(x\right) = f\left(W^{T}x\right) = f(\sum\nolimits_{s=1}^{n} W_{s}x_{s} + b) \quad (1\text{-}1)$$

Herein, s=1, 2, ..., or n, n is a natural number greater than 1, $W_{s}$ is a weight of $x_{s}$, and b is bias of the neuron. f is an activation function (activation function) of the neuron, and is for introducing a non-linear characteristic into the neural network, to convert an input signal in the neuron into an output signal. The output signal of the activation function may serve as an input of a next convolution layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

(3) Deep neural network

The deep neural network (Deep Neural Network, DNN) may be understood as a neural network having many hidden layers. There is no special metric standard for "many" herein. A multi-layer neural network and the deep neural network are essentially the same. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer. Although the DNN seems complex, it is not complex in terms of work at each layer. Simply speaking, the work at each layer is the following linear relationship expression: $\vec{y} = \alpha(W\vec{x} + \vec{b})$, where $\vec{x}$ is an input vector, $\vec{y}$ is an output vector, b is an offset vector, W is a weight matrix (also referred to as a coefficient), and $\alpha(\ )$ is an activation function. At each layer, the output vector $\vec{y}$ is obtained by performing such a simple operation on the input vector $\vec{x}$. Because the DNN has a large quantity of layers, there are a large quantity of the coefficients W and the offset vectors $\vec{b}$. How are specific parameters defined in the DNN? First, refer to the definition of the coefficient W. A three-layer DNN is used as an example. For example, a linear coefficient from the fourth neuron at the second layer to the second neuron at the third layer is defined as $w_{24}^{3}$. The superscript 3 represents a layer at which the coefficient W is located, and the subscripts correspond to an output 3rd-layer index 2 and an input 2nd-layer index 4. In conclusion, a coefficient from the $k^{th}$ neuron at the $(L-1)^{th}$ layer to the $j^{th}$ neuron at the $L^{th}$ layer is defined as $W_{jk}^{L}$. It is noted that the input layer has no parameter W. In the deep neural network, more hidden layers make the network more capable of describing a complex case in the real world. Theoretically, a model with more parameters has higher complexity and a larger "capacity". It indicates that the model can complete a more complex learning task.

(4) Convolutional neural network (Convolutional Neural Network, CNN): The convolutional neural network is a deep neural network with a convolutional architecture. The convolutional neural network includes a feature extractor including a convolutional layer and a sub-sampling layer. The feature extractor may be considered as a filter. A convolution process may be considered as performing convolution by using a trainable filter and an input image or a convolution feature map (feature map). The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature maps, and each feature map may include some neurons that are in a rectangular arrangement. Neurons in a same feature map share a weight, and the weight shared herein is a convolution kernel. Weight sharing may be understood as that an image information extraction manner is irrelevant to a location. A principle implied herein is that statistical information of a part of an image is the same as that of another part. This means that image information learned in a part can also be used in another part. Therefore, image information obtained through same learning can be used for all locations on the image. At a same convolutional layer, a plurality of convolution kernels may be used to extract different image information. Usually, a larger quantity of convolution kernels indicates richer image information reflected in a convolution operation.

The convolution kernel may be initialized in a form of a random-size matrix. In a process of training the convolutional neural network, the convolution kernel may obtain an appropriate weight through learning. In addition, benefits directly brought by weight sharing are that connections between layers of the convolutional neural network are reduced, and an overfitting risk is reduced.

(5) Back propagation algorithm

The convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, for example, a weight matrix, of an optimal super-resolution model.

(6) Loss function

In a process of training a deep neural network, because it is expected that an output of the deep neural network is maximally close to an actually predicted value, a current predicted value of the network may be compared with a target value that is expected, and then a weight vector at each layer in the neural network is updated based on a difference between the current predicted value and the target value (there is usually an initialization process before the first update, in other words, a parameter is preconfigured for each layer of the deep neural network). For example, if the predicted value of the network is large, the weight vector is adjusted to lower the predicted value until the deep neural network can predict the target value that is actually expected or a value close to the target value that is actually expected. Therefore, "how to obtain, through comparison, the difference between the predicted value and the target value" needs to be predefined. This is the loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible.

(7) Model quantization

Model quantization is a term in the field of artificial intelligence model acceleration, and is a compression technology that uses a bit width less than 32 bits to represent weight data and feature map data in a neural network. A smaller compressed bit width indicates more memory space, latency, and power consumption reduced in actual deployment. Model quantization is usually classified into post-training quantization (PTQ) and quantization-aware training (QAT). The former requires only a small quantity of unlabeled calibration datasets to quantize a pre-trained floating-point model to complete a quantization process, and is usually used for compression of a high bit width. The latter requires a complete dataset for training, and a quantization operation is simulated in a training process, so that a quantized model can be further converged to an optimal point. The latter is usually used in a precision recovery process after a large loss occurs in the quantized model.

(8) Peak signal-to-noise ratio (Peak signal-to-noise ratio, PSNR)

A peak signal-to-noise ratio is an engineering term representing a ratio of maximum possible power of a signal to destructive noise power that affects representation precision of the signal. The peak signal-to-noise ratio is often used in a method for measuring signal reconstruction quality in fields such as image processing, and is usually simply defined by a mean squared error. Generally, a higher PSNR indicates a smaller difference between a predicted value and a true value.

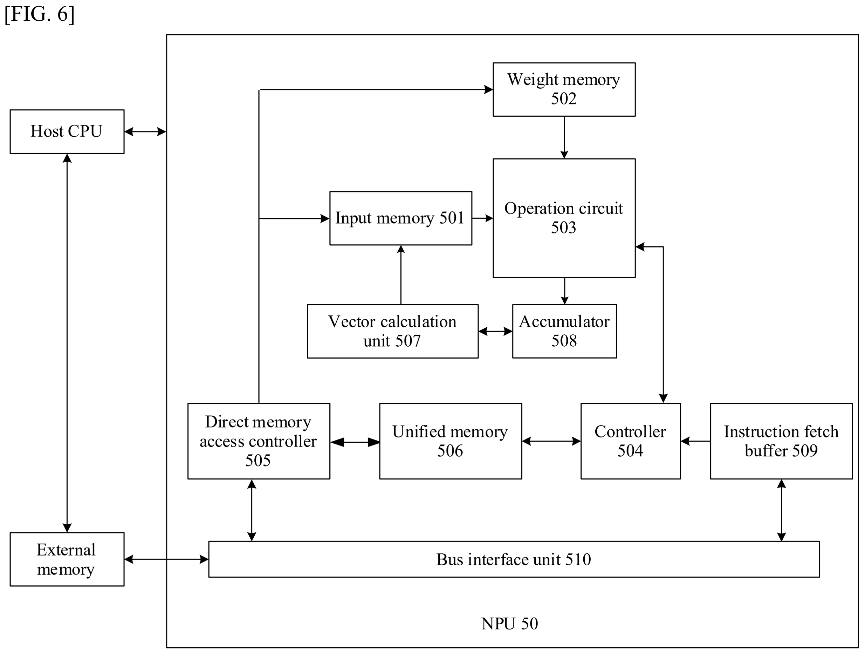

FIG. 6 shows a hardware structure of a chip according to an embodiment of this application. The chip includes a neural-network processing unit NPU 50. The chip may be disposed in the execution device 510 shown in FIG. 2, to complete calculation work of the calculation module 511. The chip may alternatively be disposed in the training device 520 shown in FIG. 2, to complete training work of the training device 520 and output the target model/rule.

The neural-network processing unit NPU 50 is mounted to a host central processing unit (central processing unit, CPU) (host CPU) as a coprocessor, and the host CPU allocates a task. A core part of the NPU is an operation circuit 503. A controller 504 controls the operation circuit 503 to extract data in a memory (a weight memory or an input memory) and perform an operation.

In some implementations, the operation circuit 503 internally includes a plurality of process engines (process engines, PEs). In some implementations, the operation circuit 503 is a two-dimensional systolic array. The operation circuit 503 may alternatively be a one-dimensional systolic array or another electronic circuit capable of performing mathematical operations such as multiplication and addition. In some implementations, the operation circuit 503 is a general-purpose matrix processor.

For example, it is assumed that there is an input matrix A, a weight matrix B, and an output matrix C. The operation circuit fetches data corresponding to the matrix B from a weight memory 502, and buffers the data on each PE in the operation circuit. The operation circuit obtains data of the matrix A from an input memory 501 to perform a matrix operation on the matrix B, to obtain a partial result or a final result of the matrix, which is stored in an accumulator (accumulator) 508.

A vector calculation unit 507 may perform further processing on the output of the operation circuit, for example, vector multiplication, vector addition, exponential operation, logarithmic operation, and value comparison. For example, the vector calculation unit 507 may be configured to perform network calculation at a non-convolutional/non-FC layer of a neural network, for example, pooling (pooling), batch normalization (batch normalization), and local response normalization (local response normalization).

In some implementations, the vector calculation unit 507 can store a processed output vector in a unified buffer 506. For example, the vector calculation unit 507 may apply a non-linear function to the output of the operation circuit 503, for example, a vector of an accumulated value, to generate an activation value. In some implementations, the vector calculation unit 507 generates a normalized value, a combined value, or both a normalized value and a combined value. In some implementations, the processed output vector can be used as an activation input to the operation circuit 503, for example, used at a subsequent layer in the neural network.

A unified memory 506 is configured to store input data and output data.

A direct memory access controller 505 (direct memory access controller, DMAC) transfers input data in an external memory to the input memory 501 and/or the unified memory 506, stores weight data in the external memory to the weight memory 502, and stores data in the unified memory 506 to the external memory.

A bus interface unit (bus interface unit, BIU) 510 is configured to implement interaction between the host CPU, the DMAC, and an instruction fetch buffer 509 through a bus.

The instruction fetch buffer (instruction fetch buffer) 509 connected to the controller 504 is configured to store instructions used by the controller 504.

The controller 504 is configured to invoke the instructions buffered in the instruction fetch buffer 509, to control a working process of the operation accelerator.

Generally, the unified memory 506, the input memory 501, the weight memory 502, and the instruction fetch buffer 509 are all on-chip (On-Chip) memories. The external memory is a memory outside the NPU, and the external memory may be a double data rate synchronous dynamic random access memory (double data rate synchronous dynamic random access memory, DDR SDRAM), a high bandwidth memory (high bandwidth memory, HBM) or another readable and writable memory.

Neural network models (especially models that implement visual-related tasks) require a large amount of memory space and computing resources during actual running, which makes it difficult to deploy the neural network models on mobile devices.

To improve running efficiency, various different methods are used to compress a model size, such as network pruning, model quantization, lightweight architecture design, and knowledge distillation. In these methods, model quantization is a relatively better technology for existing artificial intelligence acceleration chips. Because these chips usually focus on low-precision calculation, a latency, memory occupation, and power consumption of model inference can be significantly reduced. However, in the conventional technology, precision of a compressed model obtained by using a model quantization method is reduced.

Different bit widths are set for a weight and a feature map of a model to determine a cause of a decrease in quantization precision of a bottom-layer vision model. A super-resolution model is used as an example. When only a weight of the model is quantized to 6 bits, compared with a full-precision model, performance of the super-resolution model only slightly decreases (a PSNR indicator decreases by 0.059, and an SSIM indicator decreases by 0.002). On the contrary, when only a feature map is quantized, precision of the model decreases sharply, indicating that quantization on the feature greatly reduces performance of the low precision model.

Further, distribution of the feature map is visualized to analyze specific causes of sharp performance decrease caused by quantization. The following three reasons unfriendly to quantization can be obtained in conclusion:

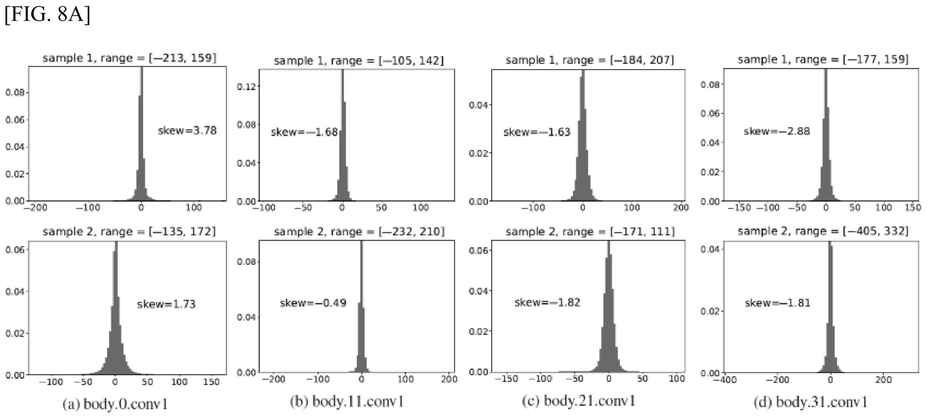

(1) Long tail: Distribution of all feature maps is dense in the middle and sparse at both ends, and most values are within a very small range. However, a range of an entire feature map is very large. For example, as shown in distribution of a feature map of body.11.conv1 shown in (b) in FIG. 8A, after a sample 2 is input, a range is [-232, 210], and 99.16% of values are all between [-30, 25]. For a common uniform quantizer, this very severe long tail distribution causes a huge quantization loss to an intermediate dense area, and severely affects performance.

(2) Asymmetry: Skew marked in FIG. 8A indicates skewness, and is an indicator for measuring asymmetry of a probability distribution around an average value of the probability distribution. For asymmetric distribution, negative skewness indicates that a long tail is on the left of the distribution, positive skewness indicates that the long tail is on the left of the distribution, and skewness 0 indicates that two ends of the distribution are symmetric. It can be seen from FIG. 8A that skewness of feature maps shows that the feature maps are very asymmetric at two ends of distribution. For example, skewness of feature maps of body.0.conv1 under two different input samples in FIG. 8A is 3.78 and 1.73. This is very unfriendly to zero-point calibration performed by using a conventional quantization method.

(3) High dynamics: Because there is no constraint of a batch normalization layer, a range of the feature map of the super-resolution model is highly flexible. For example, for a body.31.conv1 layer, a range of a feature map output by the model under a second input sample is 2.19 times that of a first sample. A high dynamic range means that an optimal quantization value is different for each sample. Therefore, it is very challenging to determine an optimal clipping value that can adapt to an entire super-resolution dataset.

In conclusion, sharp decrease in quantization performance of the model is caused by feature map distribution of long-tail, asymmetric, and highly dynamic changes. As a result, a previous post-training quantization solution of a high-level vision model cannot be directly migrated to this task. To resolve this problem, an embodiment of this application provides a model quantization method, to obtain a more appropriate clipping interval (that is, an upper threshold and a lower threshold, or may be referred to as an upper boundary threshold and a lower boundary threshold), so as to cope with two characteristics: long tail and asymmetry. These clipping values may then be fine-tuned at a fine granularity, to drive a quantized model to find an optimal point in a highly dynamic feature map change.

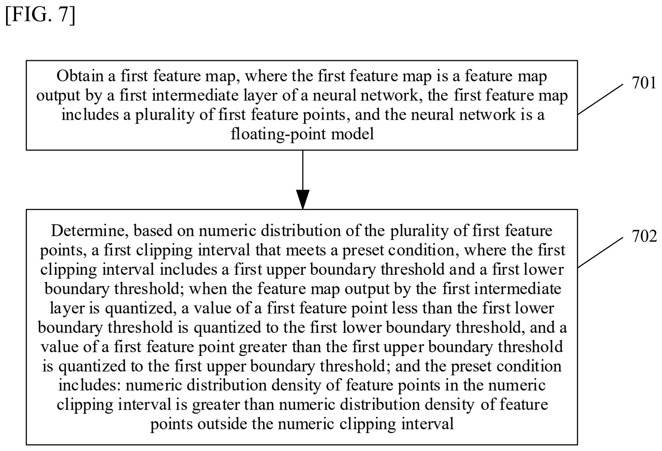

Refer to FIG. 7. The model quantization method provided in embodiments of this application may include the following steps.

701: Obtain a first feature map, where the first feature map is a feature map output by a first intermediate layer of a neural network, the first feature map includes a plurality of first feature points, and the neural network is a floating-point model.

The first feature map is a feature map output by an intermediate network layer (for example, the first intermediate layer) of the floating-point neural network. The first feature map may include the plurality of first feature points. This embodiment of this application is mainly used to determine a quantization process of the feature map output by the intermediate network layer.

The following describes basic steps related to model quantization.

It is given that a tensor x of a floating point needs to be quantized to N bits, and upper and lower boundaries of quantization of the tensor are set to *l* and *u.* A quantization process usually includes three steps, as shown in the following formula: (1) clip the tensor x of the floating point between [*l, u*], and set a clipped tensor to $x_c$; (2) map the floating point $x_c$ to a range [0, $2^N$ - 1], and set a tensor of a mapped floating point to $x_{int}$; and (3) reconstruct a tensor of the floating point from $x_{int}$ to obtain $x_q$.

$$x_c = \text{Clamp}(x, l, u);$$

$$x_{int} = \text{Round}\left(\frac{x_c - l}{u - l} \times (2^N - 1)\right);$$

and

$$x_q = x_{int} \times \frac{u - l}{2^N - 1} + l.$$

Herein, for Clamp(*x, l, u*) = min (max(*x, l*),*u*), an input is clipped within a given threshold. When a value is less than the lower threshold, the lower threshold is output; when a value is greater than the upper threshold, the upper threshold is output; or when a value is within the upper and lower thresholds, the value is output. Round() is a round-off function that outputs an integer closest to an input. Generally, an objective of post-training quantization is to obtain upper clipping threshold parameters and lower clipping threshold parameters of a weight and a feature map at each layer without modifying an original floating-point weight, and the upper clipping threshold parameters and the lower clipping threshold parameters are respectively set to ($l_w$, $u_w$) and ($l_a$, $u_a$). An objective of the present invention is to quickly obtain optimal upper and lower clipping thresholds for the weight and the feature map at each layer by using only a small quantity of unlabeled calibration images under a given quantization bit width.

702: Determine, based on numeric distribution of the plurality of first feature points, a first clipping interval that meets a preset condition, where the first clipping interval includes a first upper boundary threshold and a first lower boundary threshold; when the feature map output by the first intermediate layer is quantized, a value of a first feature point less than the first lower boundary threshold is quantized to the first lower boundary threshold, and a value of a first feature point greater than the first upper boundary threshold is quantized to the first upper boundary threshold; and the preset condition includes: numeric distribution density of feature points in the numeric clipping interval is greater than numeric distribution density of feature points outside the numeric clipping interval.

In a possible implementation, the preset condition further includes: a proportion of a quantity of the feature points in the numeric clipping interval in a quantity of feature points included in the feature map is greater than a first threshold.

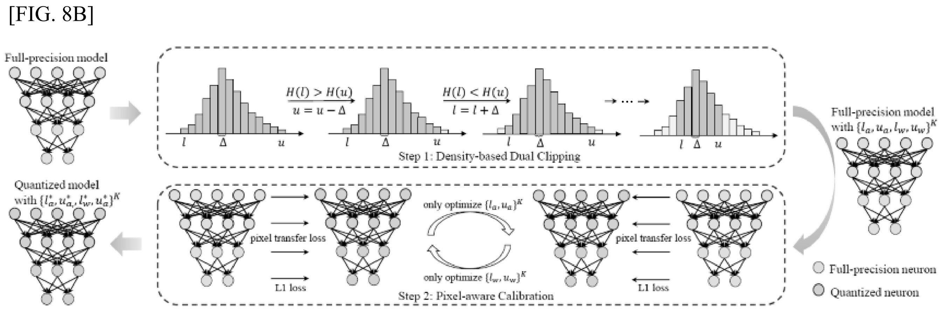

A diagram of a system architecture in this embodiment of this application may be shown in FIG. 8B. Optimization of post-training quantization of a model may include two steps. A first step is density-based dual clipping. Distribution density of an upper end and that of a lower end are continuously compared, so that outliers in floating-point parameters are removed by considering long-tail distribution and asymmetric distribution of the feature map, to obtain a floating-point model with rough upper and lower boundaries.

It can be learned from the analysis of the feature map that the asymmetric distribution and the long-tail distribution are two of main factors that affect model quantization performance. This characteristic is fully considered in the solution. Based on prior cognition that lower density indicates lower importance, in the solution, density of the upper threshold is compared with density of the lower threshold, an end with lower density is clipped and an end with higher density is retained, and then iteration is continued. An iteration process is stopped until a proportion of density within a threshold range in density of the entire feature map is less than a threshold, to obtain a current optimal clipping parameter.

In a possible implementation, a numeric range of the plurality of first feature points may be divided into a plurality of numeric intervals based on values; numeric intervals with low numeric distribution density are sequentially determined as edge numeric intervals from two sides of the plurality of numeric intervals to the inside; and until a proportion of a quantity of first feature points in another numeric interval other than the edge numeric intervals in the plurality of numeric intervals to a quantity of the plurality of first feature points is less than a second threshold, the another numeric interval is determined as the first clipping interval.

Distribution of the feature map output by the intermediate layer of the model is usually shown as dense in the middle and sparse at both ends. Therefore, a dense area is far away from an original boundary, which is very unfriendly to model quantization, especially for low-bit model quantization. Therefore, in this embodiment of this application, density-based dual clipping is proposed to cut off outliers of the feature map, to help narrow the distribution to an effective range.

Different from unilateral clipping of a high-layer semantic model using a ReLU function, during density-based dual clipping in this embodiment of this application, asymmetric distribution of feature point values in the feature map output by the intermediate layer of the model is fully considered. Range clipping at a layer is used as an example. First, a range of an original feature map is divided into N equal parts based on maximum and minimum values of the original feature map x.

$$\Delta = \frac{\max(x) - \min(x)}{N};$$

and

$$H(p) = \sum_{i \in x} \mathbb{I}(i > p \,\&\, i < p + \Delta),$$

where

$H(p)$ represents density of a location p. Based on assumption that lower distribution density on a boundary indicates lower importance of the distribution density to the whole, an objective of this technology is to maintain as many areas with highest density as possible. As shown in FIG. 8B, values of $H(p)$ at two ends are usually very small, and a value at a middle part is very large. Therefore, to obtain an appropriate upper clipping threshold and an appropriate lower clipping threshold, in this embodiment of this application, searching may start from two original points, which are referred to as $l_a$ and $u_a$. Distribution density at the two threshold locations is continuously compared, and a boundary point with lower density is clipped, so that $H(p)$ is close to the middle. This process may be expressed by using the following formula:

$$l_a^t, u_a^t = \begin{cases} l_a^{t-1} + \Delta, u_a^{t-1}, & H(l_a^{t-1}) < H(u_a^{t-1}) \\ l_a^{t-1}, u_a^{t-1} - \Delta, & H(l_a^{t-1}) \geq H(u_a^{t-1}) \end{cases},$$

where

t represents a quantity of current iteration steps. A condition for terminating iteration of a batch of samples is that when a proportion of a sum of density within a clipping threshold to entire distribution density is less than a threshold (M%), the iteration stops.

In the foregoing manner, cyclic iteration is performed by comparing the distribution density of the upper clipping threshold and the lower clipping threshold, to clip a boundary part with lower importance (lower density). This resolves quantization losses caused by the long-tail distribution and the asymmetric distribution.

In this embodiment of this application, different clipping intervals may be determined for output feature maps of different intermediate layers in the neural network based on numeric distribution of the feature maps. A second intermediate layer different from the first intermediate layer is used as an example.

In a possible implementation, a third feature map may be further obtained, where the third feature map is a feature map output by the second intermediate layer in the neural network, the third feature map includes a plurality of third feature points, and the neural network is the floating-point model; and a third clipping interval that meets the preset condition is determined based on numeric distribution of the plurality of third feature points, where the third clipping interval includes a third upper boundary threshold and a third lower boundary threshold; when the feature map output by the second intermediate layer is quantized, a value of a third feature point less than the third lower boundary threshold is quantized to the third lower boundary threshold, and a value of a third feature point greater than the third upper boundary threshold is quantized to the third upper boundary threshold.

In a possible implementation, the first feature map is a feature map output by the first intermediate layer when the neural network processes a first batch of training samples. When a next batch of training samples are input, a second feature map may be obtained, where the second feature map is a feature map output by the first intermediate layer when the neural network processes a second batch of training samples, and the second feature map includes a plurality of second feature points; a second clipping interval that meets the preset condition is determined based on numeric distribution of the plurality of second feature points, where the second clipping interval includes a second upper boundary threshold and a second lower boundary threshold; and the first clipping interval is updated based on the second clipping interval to obtain the third clipping interval.

In a possible implementation, the first clipping interval may be updated based on the second clipping interval through exponential moving average.

After most appropriate upper and lower clipping thresholds of a current calibration sample are obtained, a next batch of calibration samples are input. In addition, global upper and lower threshold parameter values are updated in an exponential moving average manner, and are expressed by using the following formula:

$$l_a = \beta \cdot l_a + (1 - \beta) \cdot l_a^T;$$

and

$$u_a = \beta \cdot u_a + (1 - \beta) \cdot u_a^T.$$

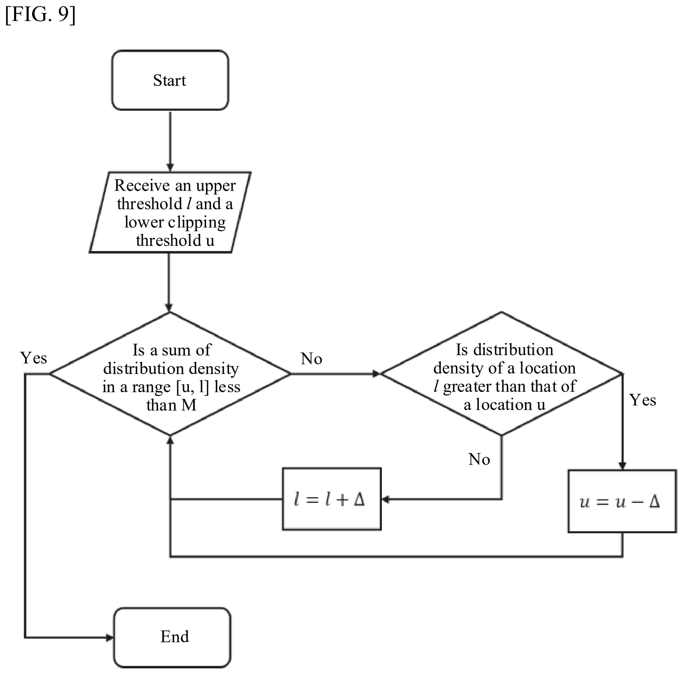

Herein, β is a hyperparameter of weight decay, and $l_a^T$ and $u_a^T$ represent clipping values of a current batch. A diagram of a specific algorithm flowchart may be shown in FIG. 9.

Then, pixel-aware calibration may be performed, and the model is quantized based on the floating-point parameters obtained in the first step. Then, the full-precision model is used to monitor the low-bit quantized model, and a quantization parameter is further fine-tuned based on a small calibration dataset, so that the quantization parameter further adapts to a highly dynamic feature map distribution change in a fine-tuning process.

Specifically, based on the first step, it may be further considered that a high dynamic change of the feature map is also one of main factors that affect the quantization performance. In this embodiment of this application, the floating-point model is used as a supervision model, and an intermediate feature and a final output of the floating-point model indicate the quantized model to further fine-tune the clipping threshold parameters. In this fine-tuning process, the threshold parameters of the quantized model continuously adapt to a change process of the highly dynamic feature map, and an optimal point is found under the supervision of the floating-point model, to obtain a high-precision quantized model.

In a possible implementation, the first clipping interval is used to quantize the neural network to obtain a quantized neural network. A first output and a second output may be obtained, where the first output is an output of an intermediate layer or an output layer when the neural network processes a training sample, and the second output is an output of the intermediate layer or the output layer when the quantized neural network processes the training sample; and a loss is determined based on the first output and the second output, and the first clipping interval is updated based on the loss.

For example, the first output and the second output may be outputs of the intermediate layer when the neural network processes the training sample, or the first output and the second output may be outputs of the output layer when the neural network processes the training sample.

In a possible implementation, during loss construction, norms of L2 are separately calculated for the first output and the second output, to obtain a processed first output and a processed second output; and the loss is determined based on a mean squared error between the processed first output and the processed second output.

In a coarse adjustment technology of density-based dual clipping, initial lower and upper clipping thresholds may be obtained for the weight and the feature map at each layer of the model. In this step, neither the weight nor the feature map is quantized, and is always in a form of the floating-point model. Then, an embodiment of this application further provides a pixel-aware calibration method, to fine-tune these clipping parameters, so as to fit high dynamic feature maps of different samples under a given bit width setting. An unlabeled calibration image and a full-precision pre-trained model are used, so that feature maps output by the output layer and the intermediate layer of the model may be obtained, to provide rich supervision information for the quantized model, and to be used to construct a dataset for fine-tuning. A pair of an input and a label of an $i^{th}$ sample may be represented as:

$$(\text{input}, \text{label})^i = \left( x^i, \left( F_1^i, F_2^i, \dots, F_B^i, O^i \right) \right),$$

where

$F_b^i$ represents an output feature map of a $b^{th}$ residual module, and $O^i$ represents an output of the floating-point model for the $i^{th}$ sample. Therefore, a small fine-tuning dataset with only 100 pairs of inputs and labels may be obtained. Because a quantity of calibration pictures is limited, fine-tuning in this method is merely for the clipping parameter. In this way, a quantity of parameters is similar to a quantity of samples, thereby avoiding overfitting. Supervision of the floating-point model on the quantized model includes two parts: one is an output of the model, and the other is a feature map. For an output, a traditional L1 loss may be taken:

$$L_O = \frac{1}{H_o \cdot W_o \cdot C_o} \left\| O - O_q \right\|_1,$$

where

$\|\cdot\|_1$ represents an L1 norm, $H_o$, $W_o$, and $C_o$ represent a height, a width, and a quantity of channels of an output image, and $O$ and $O_q$ respectively represent output results of the floating-point model and the quantized model for a same group of input samples. For supervision of the feature map, a pixel transfer loss is proposed to calculate a distance between outputs of intermediate layers of the floating-point model and the quantized model. This technology is first used to calculate an L2 norm for feature maps of the two models:

$$\hat{F}_i = \frac{F_i}{\|F_i\|_2}, \text{ and } \hat{F}_{qi} = \frac{F_{qi}}{\|F_{qi}\|_2},$$

where

$F_i$ and $F_{qi}$ represent outputs of $i^{th}$ residual modules of the floating-point model and the quantized model, respectively. Then, a mean squared error of two feature maps of all modules is calculated, and an expression of the pixel transfer loss is as follows:

$$L_{pt} = \frac{1}{B} \sum_i^N \frac{1}{H_i \cdot W_i \cdot C_i} \left\| \hat{F}_i - \hat{F}_{qi} \right\|_2$$

Herein, $H_i$, $W_i$, and $C_i$ represent a height, a width, and a quantity of channels of an output feature map of an $i^{th}$ residual module, and B represents a quantity of modules. Then, a final total loss function may be obtained:

$$L_{PaC} = L_o + \lambda L_{pt},$$

where

$\lambda$ is a hyperparameter for balancing the two losses, and optionally, may be set to 5. When total loss minimization of reconstruction loss and quantization accumulation error is fully considered, the quantized model tends to mimic the full-precision model and tries to find a most appropriate clipping threshold parameter for high dynamic distribution.

In a possible implementation, the first clipping interval may be updated based on the loss when a clipping interval corresponding to a weight parameter of the neural network remains unchanged.

To stabilize the fine-tuning process, cropping parameters of the weight and the feature map may be iteratively optimized, instead of fine-tuning the cropping parameters of the weight and the feature map together. As shown in FIG. 8B, a clipping threshold parameter of the feature map is first frozen, and a clipping threshold parameter of the weight is fine-tuned based on a total loss, where a gradient may be represented as:

$$\frac{\partial L_{PaC}}{\partial l_w^i} = \frac{\partial L_{PaC}}{\partial w_q^i} \frac{\partial w_q^i}{\partial w^i} \frac{\partial w^i}{\partial l_w^i} = \frac{\partial L_{PaC}}{\partial w_q^i} \frac{\partial w^i}{\partial l_w^i} = \frac{\partial L_{PaC}}{\partial w_q^i} \cdot \begin{cases} 1, & w^i < l_w^i \\ 0, & w^i \geq l_w^i \end{cases},$$

and

$$\frac{\partial L_{PaC}}{\partial u_w^i} = \frac{\partial L_{PaC}}{\partial w_q^i} \frac{\partial w_q^i}{\partial w^i} \frac{\partial w^i}{\partial u_w^i} = \frac{\partial L_{PaC}}{\partial w_q^i} \frac{\partial w^i}{\partial u_w^i} = \frac{\partial L_{PaC}}{\partial w_q^i} \cdot \begin{cases} 1, & w^i > u_w^i \\ 0, & w^i \leq u_w^i \end{cases},$$

where

$\{l_w^i, u_w^i\}$ is a clipping threshold parameter of a weight at an $i^{th}$ layer. Optionally, the gradient $\partial w_q^i / \partial w^i$ may be approximately 1 herein. Then, the clipping threshold parameter of the weight is frozen, and a parameter of the feature map is fine-tuned by using a same loss function. Gradient calculation is the same as weight calculation. This iterative optimization cycle repeats until it reaches calibration epochs, during which original weight parameters are not updated.

This embodiment of this application provides a model quantization method. The method includes: obtaining the first feature map, where the first feature map is a feature map output by the first intermediate layer in the neural network, the first feature map includes the plurality of first feature points, and the neural network is the floating-point model; and determining, based on the numeric distribution of the plurality of first feature points, the first clipping interval that meets the preset condition, where the first clipping interval includes the first upper boundary threshold and the first lower boundary threshold; when the feature map output by the first intermediate layer is quantized, the value of the first feature point less than the first lower boundary threshold is quantized to the first lower boundary threshold, and the value of the first feature point greater than the first upper boundary threshold is quantized to the first upper boundary threshold; and the preset condition includes: the numeric distribution density of the feature points in the numeric clipping interval is greater than the numeric distribution density of the feature points outside the numeric clipping interval. In this application, an upper clipping threshold and a lower clipping threshold are used to represent quantized parameter settings, instead of a common zero-point location and range in the previous solution. Density-based dual clipping is first used for a floating-point model, to remove outliers in long-tail distribution, so as to adapt to an asymmetric distribution trend. Further, precision of a quantized model is improved.

In addition, the model appropriately fine-tunes the quantization parameter according to a pixel-aware calibration policy, so that the quantized model can better adapt to a highly dynamic feature change.

In this application, only a small amount of unlabeled calibration data is required, and the quantized model can be obtained in several minutes. In comparison with quantization-aware training, during post-training quantization in this embodiment of this application, a complete training dataset and expensive server training resources are not required. This greatly reduces costs required in a model quantization process. In addition, a structure and a parameter of the quantized model can be obtained in a short time. This greatly improves efficiency of model deployment.

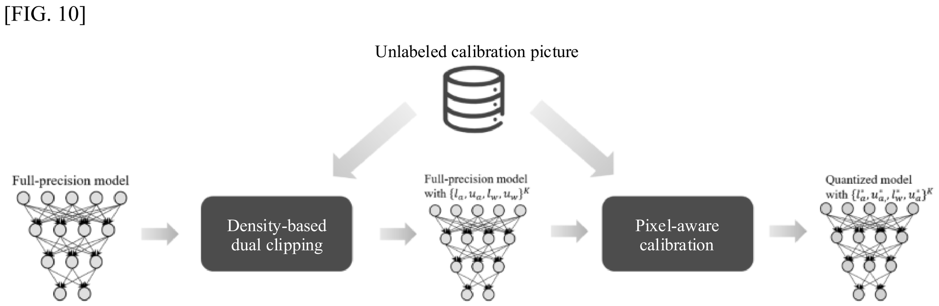

A block diagram of an embodiment of embodiments of this application is shown in FIG. 10. The following describes in detail modules and main steps in the example.

After a trained floating-point model is given, an unlabeled calibration picture is used to clip a floating-point weight and a feature map distribution range at each layer. After each sample batch is input, density of an upper threshold and a lower threshold is continuously compared, and a most appropriate parameter is obtained through iterative optimization. Then, global upper threshold and lower threshold parameters are obtained through exponential moving average, and outliers in distribution is clipped when long-tail and asymmetric feature maps are fully considered, to obtain a floating-point model with an appropriate clipping threshold.

On the basis of the first step, the model is quantized under a given bit width. The unlabeled picture and the original floating-point model are used to construct a small fine-tuning dataset. Then, an intermediate feature map and a final output of the floating-point model are used as supervision signals to guide a threshold parameter of a quantized model to be fine-tuned, further adapt to a distribution change of a high dynamic feature map of a bottom-layer vision model, and finally obtain the quantized model.

On a given training test set, compared with the following several benchmark algorithms, embodiments of this application have the following beneficial effects.

Benchmark algorithm 1: floating-point model and Bicubic algorithm results come from the EDSR in Enhanced deep residual networks for single image super-resolution and the SRResNet in Photorealistic single image super-resolution using a generative adversarial network, respectively.

Benchmark algorithm 2: commercial deployment tools, including OpenVINO, TensorRT, and SNPE.

Benchmark algorithm 3: post-training quantization algorithms oriented to high-level semantics, including the MSE algorithm in the paper *Bridging the accuracy gap for 2-bit quantized neural networks,* the percentile algorithm in the paper *Fully quantized network for object detection,* and the MinMax algorithm in the paper *Quantization and training of neural networks for efficient integer-arithmetic-only inference.*

Benchmark algorithm 4: quantization-aware training algorithms oriented to the bottom-layer vision model, including the PAMS algorithm in the paper *Pams: Quantized super-resolution via parameterized max scale* and the FQSR algorithm in the paper *Fully quantized image super-resolution networks.*

Beneficial effect 1: The EDSR model has a better objective indicator. Tests are performed on open-source datasets Set5, Set14, BSDS100, and Urban100, and the EDSR model. As shown in Table 1, compared with existing methods, embodiments of this application have a better PSNR/SSIM (a larger PSNR/SSIM indicates better performance). For example, when the model is quantized to 4 bits, in embodiments of this application, after an EDSR×4 model is quantized, there is only a precision error of 1.28 dB on the set5, which is far greater than that in another solution.

Beneficial effect 2: The SRResNet model has a better objective indicator. Tests are performed on the open-source datasets Set5, Set14, BSDS100, and Urban100, and the SRResNet model. As shown in Table 2, compared with existing methods, embodiments of this application have a better PSNR/SSIM (a larger PSNR/SSIM indicates better performance). For example, when the model is quantized to 4 bits, in embodiments of this application, after an SRResNet×4 model is quantized, there is only a precision error of 1.09 dB on the Set5, which is far greater than that in another solution.

Beneficial effect 3: Compared with a quantization-aware training solution, this solution has a better objective indicator. Tests are performed on the open-source datasets Set5, Set14, BSDS100, and Urban100, and the EDSR model. As shown in Table 3, compared with existing methods, embodiments of this application have a better PSNR/SSIM (a larger PSNR/SSIM indicates better performance).

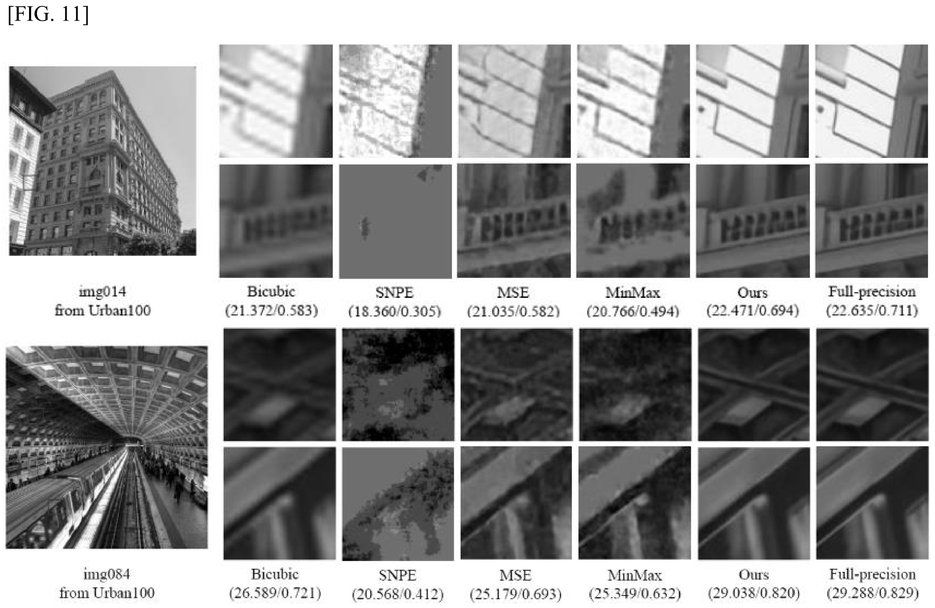

Beneficial effect 4: A better visual effect is achieved. A subjective effect is tested on the Urban100. As shown in FIG. 11, the method in embodiments of this application is closer to the floating-point model in terms of good details, and can obtain better subjective and objective effects than other methods.

## Table 1 Comparison of objective indicators (PSNR/SSIM) of the post-training quantization method on the EDSR

| Method | Bit | Set5 (×4) | Set14 (×4) | BSD100 (×4) | Urban100 (×4) | Set5 (×2) | Set14 (×2) | BSD100 (×2) | Urban100 (×2) |
|---|---|---|---|---|---|---|---|---|---|
| Baseline | 32 | 32.485/0.899 | 28.815/0.788 | 27.721/0.742 | 26.646/0.804 | 38.193/0.961 | 33.948/0.920 | 32.352/0.902 | 32.967/0.936 |
| Bicubic | 32 | 28.420/0.810 | 26.000/0.703 | 25.960/0.668 | 23.140/0.658 | 33.660/0.930 | 30.24/0.869 | 29.560/0.843 | 26.880/0.840 |
| OpenVINO [ ] | 8 | 32.148/0.892 | 28.629/0.782 | 27.572/0.735 | 26.454/0.796 | 32.148/0.892 | 28.629/0.782 | 27.572/0.735 | 26.454/0.796 |
| TensorRT [ ] | 8 | 32.329/0.895 | 28.711/0.784 | 27.639/0.738 | 26.548/0.799 | 37.880/0.958 | 33.774/0.917 | 32.217/0.899 | 32.764/0.933 |
| SNPE [ ] | 8 | 32.329/0.896 | 28.707/0.786 | 27.646/0.740 | 26.551/0.800 | 37.786/0.957 | 33.751/0.917 | 32.189/0.898 | 32.733/0.932 |
| MSE [ ] | 8 | 32.191/0.897 | 28.524/0.785 | 27.539/0.740 | 26.341/0.799 | 37.781/0.960 | 33.349/0.919 | 32.114/0.901 | 32.237/0.934 |
| Percentile [ ] | 8 | 32.306/0.897 | 28.642/0.785 | 27.630/0.739 | 26.310/0.796 | 38.041/0.960 | 33.686/0.910 | 32.256/0.901 | 32.690/0.934 |
| MinMax [ ] | 8 | 32.350/0.896 | 28.730/0.785 | 27.654/0.740 | 26.560/0.800 | 37.983/0.959 | 33.832/0.918 | 32.260/0.900 | 32.719/0.934 |
| Ours | 8 | 32.460/0.898 | 28.763/0.787 | 27.695/0.741 | 26.567/0.802 | 38.120/0.960 | 33.850/0.920 | 32.313/0.901 | 32.810/0.935 |
| OpenVINO [ ] | 6 | 30.283/0.843 | 27.426/0.735 | 26.592/0.687 | 25.214/0.740 | 34.337/0.907 | 31.436/0.860 | 30.236/0.833 | 30.172/0.878 |
| TensorRT [ ] | 6 | 30.696/0.851 | 27.719/0.744 | 26.765/0.694 | 25.459/0.749 | 34.735/0.913 | 31.778/0.867 | 30.472/0.841 | 30.582/0.887 |
| SNPE [ ] | 6 | 30.493/0.839 | 27.599/0.735 | 26.664/0.685 | 25.386/0.742 | 34.305/0.903 | 31.499/0.858 | 30.249/0.831 | 30.336/0.877 |
| MSE [ ] | 6 | 30.648/0.879 | 27.593/0.771 | 26.881/0.725 | 25.256/0.773 | 35.746/0.950 | 32.163/0.909 | 31.231/0.909 | 30.302/0.917 |
| Percentile [ ] | 6 | 31.496/0.875 | 28.188/0.768 | 27.213/0.720 | 25.890/0.773 | 36.610/0.944 | 32.890/0.904 | 31.599/0.885 | 31.666/0.917 |
| MinMax [ ] | 6 | 31.073/0.863 | 27.986/0.760 | 27.011/0.713 | 25.643/0.713 | 36.037/0.936 | 32.544/0.897 | 31.286/0.878 | 31.208/0.908 |
| Ours | 6 | 32.300/0.894 | 28.653/0.784 | 27.627/0.738 | 26.382/0.797 | 37.896/0.958 | 33.675/0.918 | 32.186/0.899 | 32.452/0.932 |
| OpenVINO [ ] | 4 | 20.526/0.542 | 18.949/0.475 | 18.636/0.439 | 18.418/0.467 | 24.157/0.606 | 22.642/0.559 | 22.346/0.543 | 22.083/0.589 |
| TensorRT [ ] | 4 | 21.343/0.512 | 19.809/0.461 | 19.495/0.423 | 19.100/0.450 | 23.897/0.608 | 22.325/0.571 | 22.208/0.553 | 22.068/0.600 |
| SNPE [ ] | 4 | 21.417/0.472 | 20.035/0.413 | 19.925/0.392 | 19.320/0.406 | 23.284/0.548 | 22.086/0.522 | 22.215/0.517 | 21.873/0.555 |
| MSE [ ] | 4 | 24.600/0.737 | 24.365/0.668 | 24.343/0.635 | 22.183/0.649 | 28.813/0.855 | 27.898/0.827 | 27.706/0.813 | 25.714/0.826 |
| Percentile [ ] | 4 | 26.570/0.696 | 24.834/0.620 | 24.173/0.576 | 22.871/0.608 | 29.803/0.788 | 27.992/0.758 | 27.187/0.736 | 26.514/0.766 |
| MinMax [ ] | 4 | 23.132/0.635 | 21.208/0.569 | 23.266/0.508 | 20.220/0.554 | 28.005/0.744 | 25.960/0.703 | 24.684/0.682 | 24.717/0.725 |
| Ours | 4 | 31.203/0.867 | 27.977/0.760 | 27.085/0.714 | 25.556/0.764 | 36.327/0.942 | 32.753/0.904 | 31.477/0.884 | 30.900/0.913 |

## Table 2 Comparison of objective indicators (PSNR/SSIM) of the post-training quantization method on the SRResNet

| Method | Bit | Set5 (×4) | Set14 (×4) | BSD100 (×4) | Urban100 (×4) | Set5 (×2) | Set14 (×2) | BSD100 (×2) | Urban100 (×2) |
|---|---|---|---|---|---|---|---|---|---|
| Baseline | 32 | 32.234/0.896 | 28.656/0.784 | 27.630/0.738 | 26.229/0.791 | 38.091/0.961 | 33.752/0.919 | 32.241/0.900 | 32.367/0.931 |
| Bicubic | 32 | 28.420/0.810 | 26.000/0.703 | 25.960/0.668 | 23.140/0.658 | 33.660/0.930 | 30.240/0.869 | 29.560/0.843 | 26.880/0.840 |
| OpenVINO [ ] | 8 | 32.003/0.890 | 28.505/0.778 | 27.509/0.732 | 26.039/0.783 | 37.451/0.955 | 33.350/0.912 | 31.978/0.895 | 31.978/0.924 |
| TensorRT [ ] | 8 | 32.013/0.891 | 28.507/0.779 | 27.508/0.733 | 26.069/0.785 | 37.506/0.956 | 33.428/0.913 | 31.984/0.895 | 32.026/0.925 |
| SNPE [ ] | 8 | 32.120/0.893 | 28.556/0.781 | 27.562/0.736 | 26.111/0.788 | 37.734/0.957 | 33.529/0.915 | 32.085/0.896 | 32.100/0.927 |
| MSE [ ] | 8 | 32.006/0.892 | 28.387/0.779 | 27.469/0.734 | 25.910/0.784 | 37.737/0.958 | 33.247/0.915 | 31.972/0.897 | 31.665/0.926 |
| Percentile [ ] | 8 | 32.092/0.893 | 28.492/0.780 | 27.525/0.735 | 26.046/0.786 | 37.739/0.958 | 33.414/0.916 | 32.058/0.897 | 31.965/0.927 |
| MinMax [ ] | 8 | 31.984/0.891 | 28.495/0.779 | 27.503/0.733 | 26.057/0.785 | 37.539/0.956 | 33.413/0.913 | 31.992/0.895 | 32.020/0.925 |
| Ours | 8 | 32.207/0.895 | 28.619/0.783 | 27.618/0.738 | 26.191/0.790 | 38.032/0.960 | 33.648/0.919 | 32.212/0.900 | 32.210/0.930 |
| OpenVINO [ ] | 6 | 30.080/0.835 | 27.348/0.727 | 26.665/0.683 | 24.861/0.721 | 33.539/0.884 | 31.007/0.849 | 30.050/0.827 | 29.505/0.857 |
| TensorRT [ ] | 6 | 29.990/0.828 | 27.277/0.724 | 26.553/0.681 | 24.782/0.719 | 33.634/0.885 | 30.923/0.846 | 30.011/0.827 | 29.270/0.854 |
| SNPE [ ] | 6 | 29.650/0.814 | 27.112/0.714 | 26.449/0.671 | 24.690/0.710 | 33.120/0.874 | 30.501/0.834 | 29.654/0.813 | 28.895/0.842 |
| MSE [ ] | 6 | 30.822/0.872 | 27.642/0.760 | 27.002/0.718 | 25.003/0.752 | 36.010/0.944 | 32.099/0.898 | 31.174/0.881 | 29.935/0.904 |
| Percentile [ ] | 6 | 30.970/0.869 | 27.874/0.760 | 27.085/0.715 | 25.340/0.756 | 35.826/0.936 | 32.314/0.893 | 31.192/0.874 | 30.707/0.902 |
| MinMax [ ] | 6 | 30.725/0.859 | 27.784/0.750 | 26.987/0.704 | 25.233/0.744 | 34.964/0.919 | 31.895/0.877 | 30.755/0.856 | 30.286/0.886 |
| Ours | 6 | 32.089/0.892 | 28.504/0.779 | 27.561/0.733 | 26.011/0.783 | 37.811/0.959 | 33.295/0.916 | 32.068/0.898 | 31.719/0.926 |
| OpenVINO [ ] | 4 | 24.316/0.573 | 23.201/0.519 | 23.276/0.500 | 21.614/0.528 | 24.415/0.535 | 23.570/0.508 | 23.551/0.502 | 22.942/0.556 |
| TensorRT [ ] | 4 | 23.729/0.461 | 22.648/0.402 | 22.808/0.389 | 21.089/0.399 | 24.769/0.535 | 23.753/0.502 | 23.733/0.491 | 22.753/0.526 |
| SNPE [ ] | 4 | 23.130/0.413 | 22.317/0.376 | 22.404/0.358 | 20.793/0.371 | 24.111/0.505 | 23.297/0.477 | 23.195/0.464 | 22.452/0.511 |
| MSE [ ] | 4 | 27.979/0.784 | 25.828/0.680 | 25.704/0.641 | 23.042/0.639 | 31.239/0.870 | 29.106/0.828 | 28.470/0.801 | 26.376/0.804 |
| Percentile [ ] | 4 | 27.283/0.699 | 25.411/0.625 | 25.329/0.603 | 22.990/0.605 | 27.369/0.703 | 26.477/0.689 | 26.180/0.668 | 24.866/0.686 |
| MinMax [ ] | 4 | 26.639/0.654 | 25.122/0.599 | 25.107/0.577 | 22.746/0.573 | 25.824/0.603 | 25.302/0.602 | 25.191/0.584 | 23.914/0.606 |
| Ours | 4 | 31.146/0.878 | 27.889/0.763 | 27.152/0.718 | 25.133/0.753 | 36.487/0.951 | 32.404/0.904 | 31.357/0.885 | 29.896/0.904 |

Table 3 Comparison of objective indicators (PSNR/SSIM) of the quantization-aware training method on the EDSR

| Method | Scale | Bit | FQ | QAT | Set5 | Set14 | BSD100 | Urban100 |
|---|---|---|---|---|---|---|---|---|
| PAMS [25] | ×4 | 32 | | | 32.095/0.894 | 28.576/0.781 | 27.562/0.736 | 26.035/0.785 |
| | | 4 | ✗ | ✓ | 31.591/0.885 | 28.199/0.773 | 27.322/0.728 | 25.321/0.762 |
| | ×2 | 32 | | | 37.985/0.960 | 33.568/0.918 | 32.155/0.899 | 31.977/0.927 |
| | | 4 | ✗ | ✓ | 37.665/0.959 | 33.196/0.915 | 31.936/0.897 | 31.100/0.919 |
| FQSR [39] | ×4 | 32 | | | 32.007/0.892 | 28.486/0.778 | 27.528/0.731 | 25.934/0.781 |
| | | 4 | ✓ | ✓ | 30.928/0.870 | 27.816/0.761 | 27.073/0.715 | 24.927/0.744 |
| | ×2 | 32 | | | 37.885/0.958 | 33.425/0.915 | 32.106/0.897 | 31.777/0.924 |
| | | 4 | ✓ | ✓ | 37.038/0.951 | 32.835/0.908 | 31.668/0.889 | 30.646/0.911 |
| Ours | ×4 | 32 | | | 32.485/0.899 | 28.815/0.788 | 27.721/0.742 | 26.646/0.804 |
| | | 4 | ✗ | ✗ | 32.105/0.891 | 28.563/0.781 | 27.553/0.714 | 26.051/0.787 |
| | | 4 | ✗ | ✓ | 32.295/0.895 | 28.576/0.784 | 27.558/0.738 | 26.232/0.794 |
| | | 4 | ✓ | ✗ | 31.203/0.867 | 27.977/0.760 | 27.085/0.714 | 25.556/0.764 |
| | | 4 | ✓ | ✓ | 31.641/0.881 | 28.217/0.772 | 27.332/0.727 | 25.748/0.777 |
| | ×2 | 32 | | | 38.193/0.961 | 33.948/0.920 | 32.352/0.902 | 32.967/0.936 |
| | | 4 | ✗ | ✗ | 37.837/0.958 | 33.662/0.917 | 32.146/0.898 | 32.335/0.930 |
| | | 4 | ✗ | ✓ | 37.992/0.960 | 33.838/0.919 | 32.205/0.900 | 32.545/0.933 |
| | | 4 | ✓ | ✗ | 36.327/0.942 | 32.753/0.904 | 31.477/0.884 | 30.900/0.913 |
| | | 4 | ✓ | ✓ | 37.561/0.955 | 33.442/0.915 | 31.992/0.896 | 31.725/0.924 |

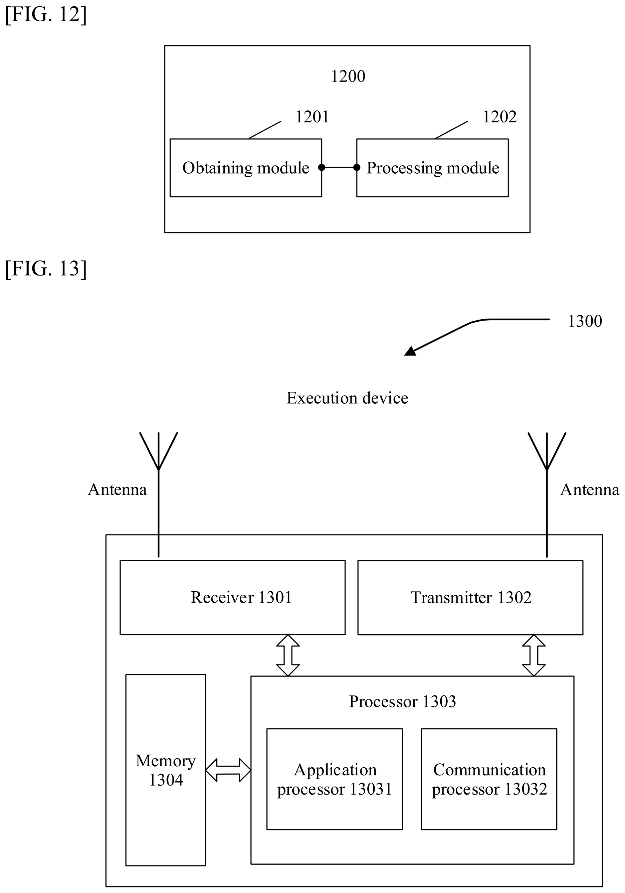

FIG. 12 is a diagram of a structure of a model quantization apparatus according to an embodiment of this application. As shown in FIG. 12, an apparatus 1200 includes:
an obtaining module 1201, configured to obtain a first feature map, where the first feature map is a feature map output by a first intermediate layer of a neural network, the first feature map includes a plurality of first feature points, and the neural network is a floating-point model.

For specific descriptions of the obtaining module 1201, refer to the descriptions of step 701 in the foregoing embodiment. Details are not described herein again; and
a processing module 1202, configured to determine, based on numeric distribution of the plurality of first feature points, a first clipping interval that meets a preset condition, where the first clipping interval includes a first upper boundary threshold and a first lower boundary threshold; when the feature map output by the first intermediate layer is quantized, a value of a first feature point less than the first lower boundary threshold is quantized to the first lower boundary threshold, and a value of a first feature point greater than the first upper boundary threshold is quantized to the first upper boundary threshold; and the preset condition includes: numeric distribution density of feature points in the numeric clipping interval is greater than numeric distribution density of feature points outside the numeric clipping interval.

For specific descriptions of the processing module 1202, refer to the descriptions of step 702 in the foregoing embodiment. Details are not described herein again.

In a possible implementation, the preset condition further includes:
a proportion of a quantity of the feature points in the numeric clipping interval in a quantity of feature points included in the feature map is greater than a first threshold.

In a possible implementation, the processing module is specifically configured to:

divide a numeric range of the plurality of first feature points into a plurality of numeric intervals based on values; and sequentially determine, from two sides of the plurality of numeric intervals to the inside, numeric intervals with low numeric distribution density as edge numeric intervals; and until a proportion of a quantity of first feature points in another numeric interval other than the edge numeric intervals in the plurality of numeric intervals to a quantity of the plurality of first feature points is less than a second threshold, determine the another numeric interval as the first clipping interval.

In a possible implementation, the first feature map is a feature map output by the first intermediate layer when the neural network processes a first batch of training samples;

the obtaining module is further configured to:

obtain a second feature map, where the second feature map is a feature map output by the first intermediate layer when the neural network processes a second batch of training samples, and the second feature map includes a plurality of second feature points; and
the processing module is further configured to:

determine, based on numeric distribution of the plurality of second feature points, a second clipping interval that meets the preset condition, where the second clipping interval includes a second upper boundary threshold and a second lower boundary threshold; and
update the first clipping interval based on the second clipping interval to obtain a third clipping interval.

In a possible implementation, the processing module is specifically configured to:
update the first clipping interval based on the second clipping interval through exponential moving average.

In a possible implementation, the obtaining module is further configured to:

obtain a third feature map, where the third feature map is a feature map output by a second intermediate layer in the neural network, the third feature map includes a plurality of third feature points, and the neural network is the floating-point model; and
the processing module is further configured to:
determine, based on numeric distribution of the plurality of third feature points, the third clipping interval that meets the preset condition, where the third clipping interval includes a third upper boundary threshold and a third lower boundary threshold; when the feature map output by the second intermediate layer is quantized, a value of a third feature point less than the third lower boundary threshold is quantized to the third lower boundary threshold, and a value of a third feature point greater than the third upper boundary threshold is quantized to the third upper boundary threshold.

In a possible implementation, the first clipping interval is used to quantize the neural network to obtain a quantized neural network; and the obtaining module is further configured to:
the processing module is further configured to:

obtain a first output and a second output, where the first output is an output of an intermediate layer or an output layer when the neural network processes a training sample, and the second output is an output of the intermediate layer or the output layer when the quantized neural network processes the training sample; and
determine a loss based on the first output and the second output, and update the first clipping interval based on the loss.

In a possible implementation, the training sample is unlabeled data.
In a possible implementation, the processing module is specifically configured to:

separately calculate norms of L2 for the first output and the second output, to obtain a processed first output and a processed second output; and
determine the loss based on a mean squared error between the processed first output and the processed second output.

In a possible implementation, the processing module is specifically configured to:
update the first clipping interval based on the loss when a clipping interval corresponding to a weight parameter of the neural network remains unchanged.
The following describes an execution device provided in embodiments of this application. FIG. 13 is a diagram of a structure of an execution device according to an embodiment of this application. An execution device 1300 may be specifically represented as a virtual reality VR device, a mobile phone, a tablet, a notebook computer, an intelligent wearable device, a monitoring device, a server, or the like. This is not limited herein. Specifically, the execution device 1300 includes a receiver 1301, a transmitter 1302, a processor 1303, and a memory 1304 (there may be one or more processors 1303 in the execution device 1300, and one processor is used as an example in FIG. 13). The processor 1303 may include an application processor 13031 and a communication processor 13032. In some embodiments of this application, the receiver 1301, the transmitter 1302, the processor 1303, and the memory 1304 may be connected through a bus or in another manner.
The memory 1304 may include a read-only memory and a random access memory, and provide instructions and data to the processor 1303. A part of the memory 1304 may further include a non-volatile random access memory (non-volatile random access memory, NVRAM). The memory 1304 stores a processor and operation instructions, an executable module or a data structure, a subset thereof, or an extended set thereof. The operation instructions may include various operation instructions for implementing various operations.

The processor 1303 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are marked as the bus system.

The method disclosed in the foregoing embodiments of this application may be applied to the processor 1303, or may be implemented by the processor 1303. The processor 1303 may be an integrated circuit chip and has a signal processing capability. In an implementation process, steps in the foregoing methods may be implemented by using a hardware integrated logic circuit in the processor 1303, or by using instructions in a form of software. The processor 1303 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware assembly. The processor 1303 may implement or perform the methods, steps, and logic block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1304. The processor 1303 reads information in the memory 1304, and runs, in combination with hardware of the processor 1303, a quantized model obtained according to the method corresponding to FIG. 7.

The receiver 1301 may be configured to: receive input digital or character information, and generate signal input related to a setting related to and function control of the execution device. The transmitter 1302 may be configured to output digital or character information through a first interface. The transmitter 1302 may be further configured to send an instruction to a disk pack through the first interface, to modify data in the disk pack. The transmitter 1302 may further include a display device, for example, a display.

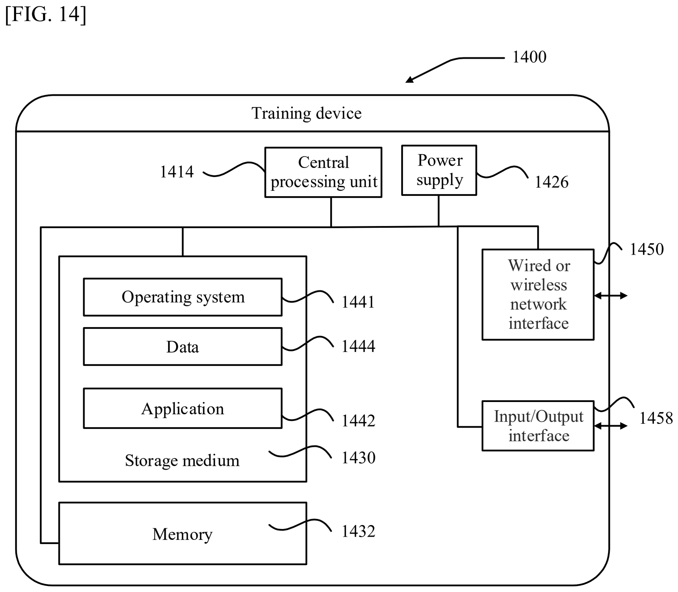

An embodiment of this application further provides a training device. FIG. 14 is a diagram of a structure of a training device according to an embodiment of this application. Specifically, a training device 1400 is implemented by one or more servers. The training device 1400 may vary greatly due to different configurations or performance, and may include one or more central processing units (central processing units, CPUs) 1414 (for example, one or more processors) and a memory 1432, and one or more storage media 1430 (for example, one or more mass storage devices) that stores an application 1442 or data 1444. The memory 1432 and the storage medium 1430 may be transient storage or persistent storage. A program stored in the storage medium 1430 may include one or more modules (not shown in the figure), and each module may include a series of instruction operations performed on the training device. Further, the central processing unit 1414 may be configured to communicate with the storage medium 1430, and perform, on the training device 1400, the series of instruction operations in the storage medium 1430.

The training device 1400 may further include one or more power supplies 1426, one or more wired or wireless network interfaces 1450, one or more input/output interfaces 1458, or one or more operating systems 1441 such as Windows ServerTM, Mac OS XTM, UnixTM, LinuxTM, and FreeBSDTM.

In this embodiment of this application, the central processing unit 1414 is configured to perform the model quantization method described in the embodiment corresponding to FIG. 7 in the foregoing embodiment.

An embodiment of this application further provides a computer program product. When the computer program product runs on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program for processing a signal, and when the program is run on a computer, the computer is enabled to perform steps performed by the foregoing execution device, or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the model training method described in the foregoing embodiment, or a chip in the training device performs the model training method described in the foregoing embodiment. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

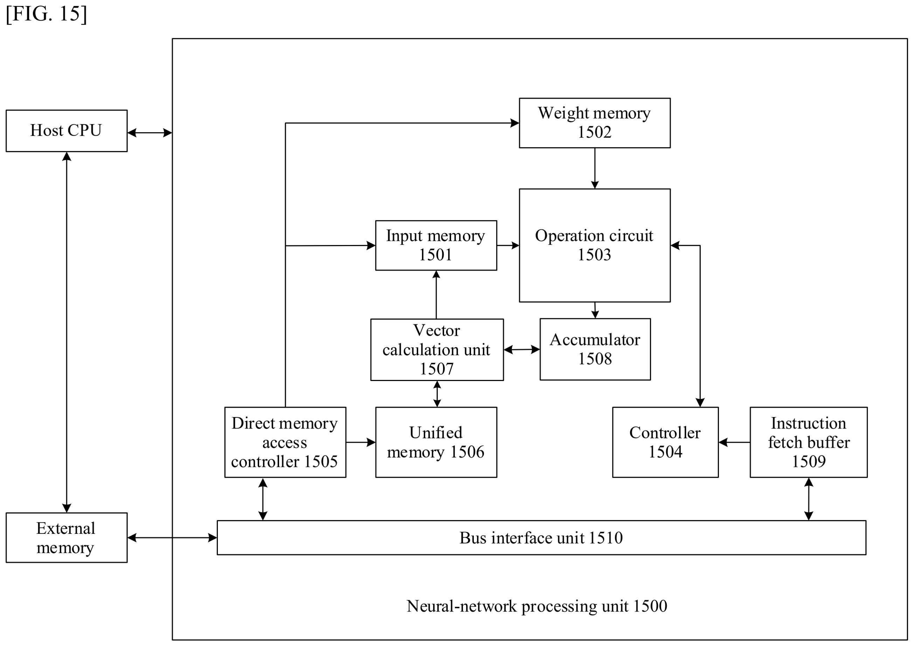

Specifically, refer to FIG. 15. FIG. 15 is a diagram of a structure of a chip according to an embodiment of this application. The chip may be represented as a neural-network processing unit NPU 1500. The NPU 1500 is mounted to a host CPU (Host CPU) as a coprocessor, and the host CPU allocates a task. A core part of the NPU is an operation circuit 1503, and a controller 1504 controls the operation circuit 1503 to extract matrix data in a memory and perform a multiplication operation.

In some implementations, the operation circuit 1503 internally includes a plurality of process engines (Process Engines, PEs). In some implementations, the operation circuit 1503 is a two-dimensional systolic array. The operation circuit 1503 may alternatively be a one-dimensional systolic array or another electronic circuit capable of performing mathematical operations such as multiplication and addition. In some implementations, the operation circuit 1503 is a general-purpose matrix processor.

For example, it is assumed that there is an input matrix A, a weight matrix B, and an output matrix C. The operation circuit fetches data corresponding to the matrix B from a weight memory 1502, and buffers the data on each PE in the operation circuit. The operation circuit obtains data of the matrix A from an input memory 1501 to perform a matrix operation on the matrix B, to obtain a partial result or a final result of the matrix, which is stored in an accumulator (accumulator) 1508.

A unified memory 1506 is configured to store input data and output data. Weight data is directly transferred to the weight memory 1502 through a direct memory access controller (Direct Memory Access Controller, DMAC) 1505. The input data is also transferred to the unified memory 1506 through the DMAC.

A BIU, bus interface unit, that is, a bus interface unit 1510, is configured for interaction between an AXI bus and the DMAC and interaction between the AXI bus and an instruction fetch buffer (Instruction Fetch Buffer, IFB) 1509.

The bus interface unit 1510 (Bus Interface Unit, BIU for short) is configured to obtain an instruction from an external memory through the instruction fetch buffer 1509, and is further configured to obtain original data of the input matrix A or the weight matrix B from the external memory through the direct memory access controller 1505.

The DMAC is mainly configured to transfer input data in the external memory DDR to the unified memory 1506, transfer weight data to the weight memory 1502, or transfer input data to the input memory 1501.

A vector calculation unit 1507 includes a plurality of operation processing units. If required, further processing is performed on an output of the operation circuit 1503, for example, vector multiplication, vector addition, an exponential operation, a logarithmic operation, or value comparison. The vector calculation unit 1507 is mainly configured to perform network calculation at a non-convolutional/fully connected layer of a neural network, for example, batch normalization (batch normalization), pixel-level summation, and upsampling on a feature map.

In some implementations, the vector calculation unit 1507 can store a processed output vector in the unified memory 1506. For example, the vector calculation unit 1507 may apply a linear function or a non-linear function to the output of the operation circuit 1503, for example, perform linear interpolation on a feature map extracted by a convolutional layer, for another example, add value vectors, to generate an activation value. In some implementations, the vector calculation unit 1507 generates a normalized value, a pixel-level summation value, or both. In some implementations, the processed output vector can be used as an activation input to the operation circuit 1503, for example, used at a subsequent layer in the neural network.

The instruction fetch buffer (instruction fetch buffer) 1509 connected to the controller 1504 is configured to store instructions used by the controller 1504.

The unified memory 1506, the input memory 1501, the weight memory 1502, and the instruction fetch buffer 1509 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all of the modules may be selected based on actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. In addition, a specific hardware structure for achieving a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device like a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

## Claims

1.  A model quantization method, wherein the method comprises:

    obtaining a first feature map, wherein the first feature map is a feature map output by a first intermediate layer of a neural network, the first feature map comprises a plurality of first feature points, and the neural network is a floating-point model; and
    determining, based on numeric distribution of the plurality of first feature points, a first clipping interval that meets a preset condition, wherein the first clipping interval comprises a first upper boundary threshold and a first lower boundary threshold; when the feature map output by the first intermediate layer is quantized, a value of a first feature point less than the first lower boundary threshold is quantized to the first lower boundary threshold, and a value of a first feature point greater than the first upper boundary threshold is quantized to the first upper boundary threshold; and the preset condition comprises: numeric distribution density of feature points in the numeric clipping interval is greater than numeric distribution density of feature points outside the numeric clipping interval.

2.  The method according to claim 1, wherein the preset condition further comprises: a proportion of a quantity of the feature points in the numeric clipping interval in a quantity of feature points comprised in the feature map is greater than a first threshold.

3.  The method according to claim 1 or 2, wherein the determining, based on numeric distribution of the plurality of first feature points, a first clipping interval that meets a preset condition comprises:

    dividing a numeric range of the plurality of first feature points into a plurality of numeric intervals based on values; and
    sequentially determining, from two sides of the plurality of numeric intervals to the inside, numeric intervals with low numeric distribution density as edge numeric intervals; and until a proportion of a quantity of first feature points in another numeric interval other than the edge numeric intervals in the plurality of numeric intervals to a quantity of the plurality of first feature points is less than a second threshold, determining the another numeric interval as the first clipping interval.

4.  The method according to any one of claims 1 to 3, wherein the first feature map

    is a feature map output by the first intermediate layer when the neural network processes a first batch of training samples; and
    the method further comprises:

obtaining a second feature map, wherein the second feature map is a feature map output by the first intermediate layer when the neural network processes a second batch of training samples, and the second feature map comprises a plurality of second feature points;

determining, based on numeric distribution of the plurality of second feature points, a second clipping interval that meets the preset condition, wherein the second clipping interval comprises a second upper boundary threshold and a second lower boundary threshold; and

updating the first clipping interval based on the second clipping interval to obtain a third clipping interval.

5. The method according to claim 4, wherein the updating the first clipping interval based on the second clipping interval comprises:

updating the first clipping interval based on the second clipping interval through exponential moving average.

6. The method according to any one of claims 1 to 5, wherein the method further comprises:

obtaining a third feature map, wherein the third feature map is a feature map output by a second intermediate layer in the neural network, the third feature map comprises a plurality of third feature points, and the neural network is the floating-point model; and

determining, based on numeric distribution of the plurality of third feature points, the third clipping interval that meets the preset condition, wherein the third clipping interval comprises a third upper boundary threshold and a third lower boundary threshold; when the feature map output by the second intermediate layer is quantized, a value of a third feature point less than the third lower boundary threshold is quantized to the third lower boundary threshold, and a value of a third feature point greater than the third upper boundary threshold is quantized to the third upper boundary threshold.

7. The method according to any one of claims 1 to 6, wherein the first clipping interval is used to quantize the neural network to obtain a quantized neural network; and the method further comprises:

obtaining a first output and a second output, wherein the first output is an output of an intermediate layer or an output layer when the neural network processes a training sample, and the second output is an output of the intermediate layer or the output layer when the quantized neural network processes the training sample; and

determining a loss based on the first output and the second output, and updating the first clipping interval based on the loss.

8. The method according to claim 7, wherein the training sample is unlabeled data.

9. The method according to claim 7 or 8, wherein the first output and the second output are feature maps output by the intermediate layer; and the determining a loss based on the first output and the second output comprises:

separately calculating norms of L2 for the first output and the second output, to obtain a processed first output and a processed second output; and

determining the loss based on a mean squared error between the processed first output and the processed second output.

10. The method according to any one of claims 7 to 9, wherein the updating the first clipping interval based on the loss comprises:

updating the first clipping interval based on the loss when a clipping interval corresponding to a weight parameter of the neural network remains unchanged.

11. A model quantization apparatus, wherein the apparatus comprises:

an obtaining module, configured to obtain a first feature map, wherein the first feature map is a feature map output by a first intermediate layer of a neural network, the first feature map comprises a plurality of first feature points, and the neural network is a floating-point model; and

a processing module, configured to determine, based on numeric distribution of the plurality of first feature points, a first clipping interval that meets a preset condition, wherein the first clipping interval comprises a first upper boundary threshold and a first lower boundary threshold; when the feature map output by the first intermediate layer is quantized, a value of a first feature point less than the first lower boundary threshold is quantized to the first lower boundary threshold, and a value of a first feature point greater than the first upper boundary threshold is quantized to the first upper boundary threshold; and the preset condition comprises: numeric distribution density of feature points in the numeric clipping interval is greater than numeric distribution density of feature points outside the numeric clipping interval.

12. The apparatus according to claim 11, wherein the preset condition further comprises:
a proportion of a quantity of the feature points in the numeric clipping interval in a quantity of feature points comprised in the feature map is greater than a first threshold.

13. The apparatus according to claim 11 or 12, wherein the processing module is specifically configured to:

divide a numeric range of the plurality of first feature points into a plurality of numeric intervals based on values; and
sequentially determine, from two sides of the plurality of numeric intervals to the inside, numeric intervals with low numeric distribution density as edge numeric intervals; and until a proportion of a quantity of first feature points in another numeric interval other than the edge numeric intervals in the plurality of numeric intervals to a quantity of the plurality of first feature points is less than a second threshold, determine the another numeric interval as the first clipping interval.

14. The apparatus according to any one of claims 11 to 13, wherein the first feature map is a feature map output by the first intermediate layer when the neural network processes a first batch of training samples;
the obtaining module is further configured to:

obtain a second feature map, wherein the second feature map is a feature map output by the first intermediate layer when the neural network processes a second batch of training samples, and the second feature map comprises a plurality of second feature points; and
the processing module is further configured to:

determine, based on numeric distribution of the plurality of second feature points, a second clipping interval that meets the preset condition, wherein the second clipping interval comprises a second upper boundary threshold and a second lower boundary threshold; and
update the first clipping interval based on the second clipping interval to obtain a third clipping interval.

15. The apparatus according to claim 14, wherein the processing module is specifically configured to:
update the first clipping interval based on the second clipping interval through exponential moving average.

16. The apparatus according to any one of claims 11 to 15, wherein the obtaining module is further configured to:

obtain a third feature map, wherein the third feature map is a feature map output by a second intermediate layer in the neural network, the third feature map comprises a plurality of third feature points, and the neural network is the floating-point model; and
the processing module is further configured to:
determine, based on numeric distribution of the plurality of third feature points, the third clipping interval that meets the preset condition, wherein the third clipping interval comprises a third upper boundary threshold and a third lower boundary threshold; when the feature map output by the second intermediate layer is quantized, a value of a third feature point less than the third lower boundary threshold is quantized to the third lower boundary threshold, and a value of a third feature point greater than the third upper boundary threshold is quantized to the third upper boundary threshold.

17. The apparatus according to any one of claims 11 to 16, wherein the first clipping interval is used to quantize the neural network to obtain a quantized neural network; and the obtaining module is further configured to:
the processing module is further configured to:

obtain a first output and a second output, wherein the first output is an output of an intermediate layer or an output layer when the neural network processes a training sample, and the second output is an output of the intermediate layer or the output layer when the quantized neural network processes the training sample; and
determine a loss based on the first output and the second output, and update the first clipping interval based on the loss.

**18.** The apparatus according to claim 17, wherein the training sample is unlabeled data.

**19.** The apparatus according to claim 17 or 18, wherein the processing module is specifically configured to:

separately calculate norms of L2 for the first output and the second output, to obtain a processed first output and a processed second output; and
determine the loss based on a mean squared error between the processed first output and the processed second output.

**20.** The apparatus according to any one of claims 17 to 19, wherein the processing module is specifically configured to: update the first clipping interval based on the loss when a clipping interval corresponding to a weight parameter of the neural network remains unchanged.

**21.** A computer storage medium, wherein the computer storage medium stores one or more instructions, and when the instructions are executed by one or more computers, the one or more computers are enabled to perform operations of the method according to any one of claims 1 to 10.

**22.** A computer program product, comprising computer-readable instructions, wherein when the computer-readable instructions are run on a computer device, the computer device is enabled to perform the method according to any one of claims 1 to 10.

**23.** A system, comprising at least one processor and at least one memory, wherein the processor and the memory are connected and communicate with each other through a communication bus;

the at least one memory is configured to store code; and
the at least one processor is configured to execute the code to perform the method according to any one of claims 1 to 10.

[FIG. 1]

Intelligent information chain

Intelligent product and industry application

| Translation/Text analysis/... | Voice/Vision/Image/ ... |

Data

Data processing:

| Data training/Machine learning/ Deep learning | Searching/ Inference/ Decision-making | ... |

Infrastructure | Sensor | Intelligent chip | Basic platform | ...

IT value chain

EP 4 654 082 A1

[FIG. 2]

EP 4 654 082 A1

[FIG. 3a]

[FIG. 3b]

[FIG. 4]

Plan and control
(obstacle avoidance/
traffic light decision-
making/traffic sign
decision-making)

Plan and control
(obstacle avoidance)

Laser ranging fusion

Automatically
park/Locate a
composition

[FIG. 5]

[FIG. 6]

NPU 50

- Instruction fetch buffer 509
- Controller 504
- Weight memory 502
- Operation circuit 503
- Accumulator 508
- Input memory 501
- Vector calculation unit 507
- Unified memory 506
- Direct memory access controller 505
- Bus interface unit 510
- Host CPU
- External memory

[FIG. 7]

Obtain a first feature map, where the first feature map is a feature map output by a first intermediate layer of a neural network, the first feature map includes a plurality of first feature points, and the neural network is a floating-point model — 701

Determine, based on numeric distribution of the plurality of first feature points, a first clipping interval that meets a preset condition, where the first clipping interval includes a first upper boundary threshold and a first lower boundary threshold; when the feature map output by the first intermediate layer is quantized, a value of a first feature point less than the first lower boundary threshold is quantized to the first lower boundary threshold, and a value of a first feature point greater than the first upper boundary threshold is quantized to the first upper boundary threshold; and the preset condition includes: numeric distribution density of feature points in the numeric clipping interval is greater than numeric distribution density of feature points outside the numeric clipping interval — 702

[FIG. 8A]

(a) body.0.conv1 (b) body.11.conv1 (c) body.21.conv1 (d) body.31.conv1

[FIG. 8B]

[FIG. 9]

[FIG. 10]

Unlabeled calibration picture

Full-precision model

Density-based dual clipping

Full-precision model with $\{l_a, u_a, l_w, u_w\}^K$

Pixel-aware calibration

Quantized model with $\{l_a^*, u_a^*, l_w^*, u_a^*\}^K$

[FIG. 11]

img014
from Urban100

Bicubic
(21.372/0.583)

SNPE
(18.360/0.305)

MSE
(21.035/0.582)

MinMax
(20.766/0.494)

Ours
(22.471/0.694)

Full-precision
(22.635/0.711)

img084
from Urban100

Bicubic
(26.589/0.721)

SNPE
(20.568/0.412)

MSE
(25.179/0.693)

MinMax
(25.349/0.632)

Ours
(29.038/0.820)

Full-precision
(29.288/0.829)

EP 4 654 082 A1

[FIG. 12]

[FIG. 13]

[FIG. 14]

1400

Training device

1414 Central processing unit

Power supply 1426

Wired or wireless network interface 1450

1458 Input/Output interface

Operating system 1441

Data 1444

Application 1442

Storage medium 1430

Memory 1432

[FIG. 15]

Weight memory
1502

Input memory
1501

Operation circuit
1503

Vector
calculation unit
1507

Accumulator
1508

Direct memory
access
controller 1505

Unified
memory 1506

Controller
1504

Instruction
fetch buffer
1509

Host CPU

External
memory

Bus interface unit 1510

Neural-network processing unit 1500

EP 4 654 082 A1

42

## INTERNATIONAL SEARCH REPORT

| International application No. |
| --- |
| **PCT/CN2024/074846** |

**A.    CLASSIFICATION OF SUBJECT MATTER**

G06N3/0464(2023.01)i;   G06N3/048(2023.01)i;   G06N3/084(2023.01)i

According to International Patent Classification (IPC) or to both national classification and IPC

**B.    FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNABS, CNTXT, VEN, ENTXTC, ENTXT, CNKI: 神经网络, 模型, 量化, 密度, 区间, 范围, 上界, 上边界, 下界, 下边界, 精度, 阈值, 预设值, 预定值, 截断, 截掉, 去掉, Neural, network, model, quantification, density, boundary, upper, range, lower, accuracy, precision, threshold, preset, value, cut, off, truncation

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 116227549 A (HUAWEI TECHNOLOGIES CO., LTD.) 06 June 2023 (2023-06-06) claims 1-23 | 1-23 |
| A | CN 115640840 A (HANGZHOU CANAAN CREATIVE CO., LTD.) 24 January 2023 (2023-01-24) description, paragraphs 6-104, and figures 1-7 | 1-23 |
| A | CN 115049055 A (XIAMEN UNIVERSITY) 13 September 2022 (2022-09-13) entire document | 1-23 |
| A | US 2020026986 A1 (SAMSUNG ELECTRONICS CO., LTD.) 23 January 2020 (2020-01-23) entire document | 1-23 |
| A | US 2020364552 A1 (BAIDU USA LLC) 19 November 2020 (2020-11-19) entire document | 1-23 |
| A | US 2022036162 A1 (XIAMEN SIGMASTAR TECHNOLOGY LTD.) 03 February 2022 (2022-02-03) entire document | 1-23 |

☐ Further documents are listed in the continuation of Box C.     ☑ See patent family annex.

| | |
| --- | --- |
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **01 March 2024** | **13 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/074846**

| Patent document cited in search report | | | Publication date (day/month/year) | Patent family member(s) | | | Publication date (day/month/year) |
|---|---|---|---|---|---|---|---|
| CN | 116227549 | A | 06 June 2023 | None | | | |
| CN | 115640840 | A | 24 January 2023 | None | | | |
| CN | 115049055 | A | 13 September 2022 | None | | | |
| US | 2020026986 | A1 | 23 January 2020 | KR | 20190125141 | A | 06 November 2019 |
| US | 2020364552 | A1 | 19 November 2020 | CN | 111931922 | A | 13 November 2020 |
| US | 2022036162 | A1 | 03 February 2022 | TW | 202207091 | A | 16 February 2022 |
| | | | | CN | 112200296 | A | 08 January 2021 |
| | | | | TW | 741877 | B1 | 01 October 2021 |

Form PCT/ISA/210 (patent family annex) (July 2022)

**EP 4 654 082 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310129458